(19) **Europäisches Patentamt / European Patent Office / Office européen des brevets**

(11) **EP 4 671 687 A1**

(12) **EUROPEAN PATENT APPLICATION**
published in accordance with Art. 153(4) EPC

(43) Date of publication:
**31.12.2025   Bulletin 2026/01**

(21) Application number: **24780446.1**

(22) Date of filing: **27.03.2024**

(51) International Patent Classification (IPC):
*G01C 21/26* (2006.01)     *B62J 50/22* (2020.01)
*G08G 1/09* (2006.01)

(52) Cooperative Patent Classification (CPC):
**B62J 50/22; G01C 21/26; G08G 1/09**

(86) International application number:
**PCT/JP2024/012243**

(87) International publication number:
**WO 2024/204341 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **28.03.2023   JP 2023052479**

(71) Applicant: **HONDA MOTOR CO., LTD.**
**Tokyo 105-8404 (JP)**

(72) Inventors:
• **NOMURA Naoki**
  **Tokyo 107-8556 (JP)**
• **SUNAMOTO Masayuki**
  **Tokyo 107-8556 (JP)**
• **ONUKI Hirotaka**
  **Tokyo 107-8556 (JP)**
• **HATTORI Makoto**
  **Tokyo 107-8556 (JP)**

(74) Representative: **Kiwit, Benedikt**
**Mitscherlich PartmbB**
**Patent- und Rechtsanwälte**
**Karlstraße 7**
**80333 München (DE)**

(54) **INFORMATION PROVIDING METHOD, INFORMATION PROVIDING PROGRAM, STORAGE MEDIUM, AND INFORMATION PROCESSING DEVICE**

(57)    There is provided an information providing method of providing information to an occupant of an electric bicycle (10), and the information providing method includes a step of acquiring another vehicle position information that is information related to a current geographical position of another vehicle different from the electric bicycle (10), a step of generating display information having a map area (821) for displaying map information, which includes information indicating the current geographical position of the another vehicle, based on the another vehicle position information, the display information being information to be displayed on a portable terminal (8) disposed at a position visually recognizable by the occupant, and a step of displaying the display information on the portable terminal (8).

**(Cont. next page)**

EP 4 671 687 A1

# FIG. 12

823e  823f

8

800

820

825, 823

821b, U1

821

821c

821b, U2

821a, U0

822

822a

822b

823d1

824, 823

823d

823a

823b

16.0 km/h

3.1 km    204 kcal

823c

860

861    862    863    864    865

**Description**

TECHNICAL FIELD

The present invention relates to an information providing method, an information providing program, a storage medium, and an information processing device that provide information to an occupant of a vehicle.

BACKGROUND ART

A method of sharing position information obtained by a GPS (Global Positioning System) sensor built in a portable terminal with another portable terminal owned by another person has been disclosed in the related art (for example, Patent Literature 1).

CITATION LIST

PATENT LITERATURE

Patent Literature 1: JP2002-199433A

SUMMARY OF INVENTION

TECHNICAL PROBLEM

A vehicle may be provided with a display on which map information is displayed. During traveling of a vehicle, it is desired to improve convenience for an occupant by displaying useful information on a display in addition to the map information.
The present invention provides an information providing method, an information providing program, a storage medium, and an information processing device that enable to improve convenience for an occupant during traveling of a vehicle.

SOLUTION TO PROBLEM

According to the present invention, there is provided an information providing method of providing information to an occupant of a vehicle, the information providing method including:

a step of acquiring another vehicle position information that is information related to a current geographical position of another vehicle different from the vehicle;
a step of generating display information having a display area for displaying map information, which includes information indicating the current geographical position of the another vehicle, based on the another vehicle position information, the display information being information to be displayed on a display unit disposed at a position visually recognizable by the occupant; and
a step of displaying the display information on the display unit.

According to the present invention, there is provided an information providing program of providing information to an occupant of a vehicle, the information providing program causing a computer to perform:

a step of acquiring another vehicle position information that is information related to a current geographical position of another vehicle different from the vehicle;
a step of generating display information having a display area for displaying map information, which includes information indicating the current geographical position of the another vehicle, based on the another vehicle position information, the display information being information to be displayed on a display unit disposed at a position visually recognizable by the occupant; and
a step of displaying the display information on the display unit.

According to the present invention, there is provided a computer-readable storage medium storing the information providing program described above.
According to the present invention, there is provided an information processing device that provides information to an occupant of a vehicle, the information processing device including:

a position information acquisition unit that acquires another vehicle position information that is information related to a current geographical position of another vehicle different from the vehicle;

a generation unit that generates display information having a display area for displaying map information, which includes information indicating the current geographical position of the another vehicle, based on the another vehicle position information acquired by the position information unit, the display information being information to be displayed on a display unit disposed at a position visually recognizable by the occupant; and

an output unit that outputs the display information generated by the generation unit to the display unit.

ADVANTAGEOUS EFFECTS OF INVENTION

According to the present invention, it is possible to improve the convenience of the occupant when the vehicle is traveling.

BRIEF DESCRIPTION OF DRAWINGS

[FIG. 1] FIG. 1 is a side view of an electric bicycle 10.

[FIG. 2] FIG. 2 is a schematic diagram of a power transmission mechanism T including a power unit 20.

[FIG. 3] FIG. 3 is a schematic diagram of the power transmission mechanism T including the power unit 20 in which a switching transmission device 30 is provided between a driven sprocket 81 and a rear wheel 78.

[FIG. 4] FIG. 4 is a diagram illustrating electric paths and communication paths of the power unit 20, a battery 2, and a control circuit 40 in the electric bicycle 10.

[FIG. 5] FIG. 5 is a graph illustrating a relationship between an assist ratio and a vehicle speed at each power level.

[FIG. 6] FIG. 6 is a control map in which a target current for a vehicle speed and a target torque is set.

[FIG. 7] FIG. 7 is a graph illustrating an example of responsiveness of an instruction current at each response level.

[FIG. 8] FIG. 8 is a diagram illustrating a relationship between a user, a sales store, and a server.

[FIG. 9] FIG. 9 is a functional block diagram of a portable terminal 8, the electric bicycle 10, and a server 90.

[FIG. 10] FIG. 10 illustrates an application setting screen 810 of a user application.

[FIG. 11] FIG. 11 illustrates a friend detail screen 8110 of the user application.

[FIG. 12] FIG. 12 illustrates a traveling screen 820 of the user application when a standard mode is selected.

[FIG. 13] FIG. 13 illustrates the traveling screen 820 on which attention calling information 821d is displayed when the electric bicycle 10 approaches a warning position.

[FIG. 14] FIG. 14 illustrates a traveling screen 820A of the user application when a sport mode is selected.

[FIG. 15] FIG. 15 illustrates a map screen 830 of the user application.

[FIG. 16] FIG. 16 illustrates a traveling log screen 840 of the user application.

[FIG. 17] FIG. 17 illustrates a screen 8400 on which a list of information 8401 of activities on the day of riding the electric bicycle 10 is displayed.

[FIG. 18] FIG. 18 illustrates a detail screen displayed when the information 8401 on each activity illustrated in FIG. 17 is touched.

[FIG. 19] FIG. 19 illustrates an assist setting screen 850 of the user application.

[FIG. 20] FIG. 20 illustrates an example of a control flow of an information providing method according to the present invention.

[FIG. 21] FIG. 21 illustrates an example of a control flow when the electric bicycle 10 approaches a warning position icon 821c.

[FIG. 22] FIG. 22 is a diagram illustrating whether position information on a friend U1 is shared by the portable terminal 8 of a user U0.

[FIG. 23] FIG. 23 illustrates the traveling screen 820 when a friend position icon 821b and the warning position icon 821c overlap.

DESCRIPTION OF EMBODIMENTS

Hereinafter, an embodiment of an information providing method, an information providing program, a storage medium storing the information providing program, and an information processing device that provide information to an occupant of a vehicle will be described with reference to the accompanying drawings. In the embodiment described below, a case where the vehicle is an electric bicycle will be described as an example.

4

[Vehicle]

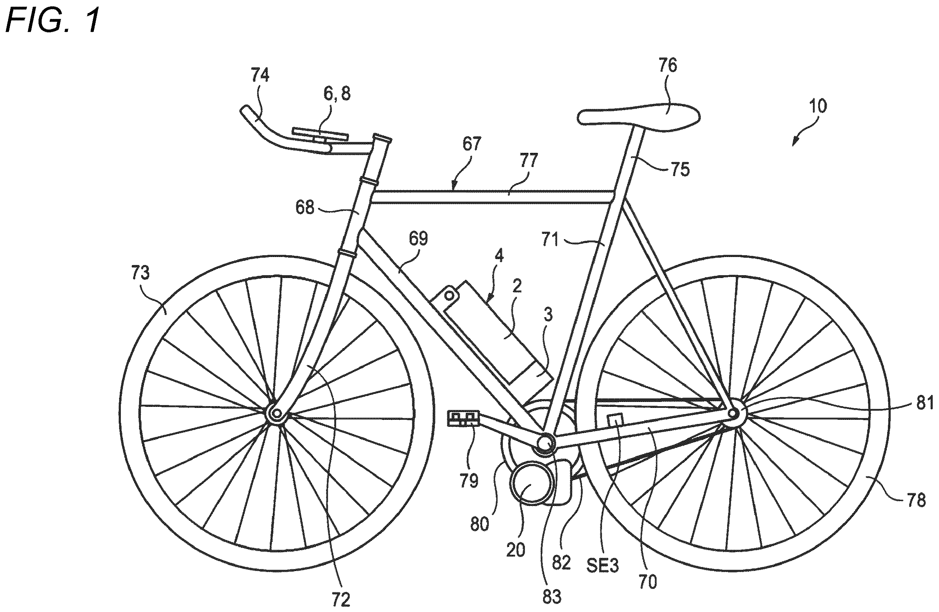

First, an electric bicycle 10, which is an embodiment of a vehicle, will be described with reference to FIGS. 1 to 4.

As illustrated in FIG. 1, an electric bicycle 10 is an electrically assisted bicycle which includes a front wheel 73, a rear wheel 78, a vehicle body frame 67, a power unit 20 driving the rear wheel 78, and a battery unit 4 electrically connected to the power unit 20, and which is capable of outputting an assist force generated by the power unit 20. Here, a case where the electric bicycle 10 is a sports cycle type is illustrated as an example.

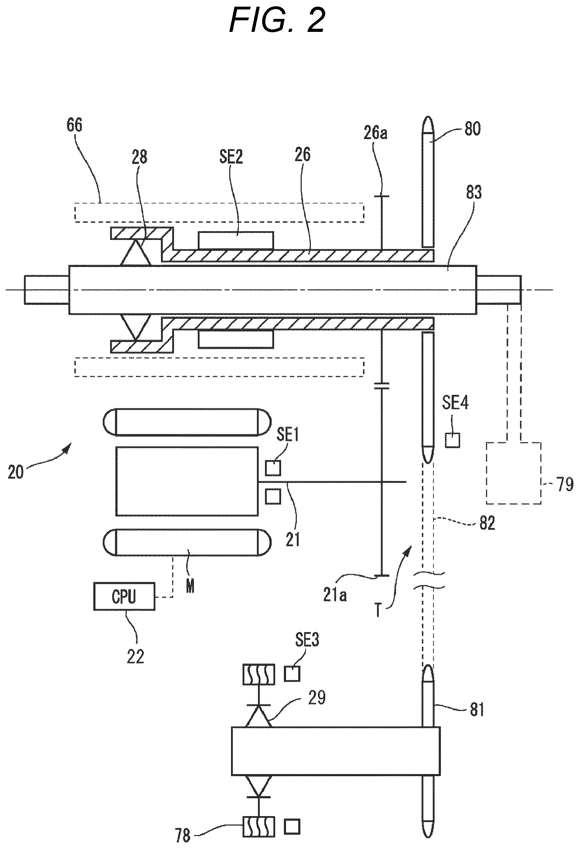

The vehicle body frame 67 includes a head pipe 68 at a front end, a down pipe 69 going down toward a rear side from the head pipe 68 and extending from a front portion to a rear portion of a vehicle body, a support pipe 66 (see FIG. 2) fixed to a rear end of the down pipe 69 and extending in a left-right direction, a seat post 71 rising upward from the support pipe 66, a top pipe 77 that couples the head pipe 68 and the seat post 71 above the down pipe 69, and a pair of left and right rear forks 70 extending rearward from the support pipe 66.

Front forks 72 are supported by the head pipe 68 so as to be steerable, and the front wheel 73 is pivotally supported by lower ends of the front forks 72. A steering handlebar 74 is provided at an upper end of the front forks 72. The steering handlebar 74 is provided with a portable terminal holder 6 for holding a portable terminal 8 owned by an occupant (for example, a driver, also referred to as a user). That is, the portable terminal 8 is disposed at a position visually recognizable by the occupant. The portable terminal 8 is, for example, a smartphone. It should be noted that the portable terminal holder 6 is not necessarily required, and the portable terminal 8 may be carried by an occupant, that is, the portable terminal 8 may be mounted to (stored by) the occupant himself/herself or a wearing article (clothes and bags) of the occupant.

The rear wheel 78 as a drive wheel is pivotally supported between rear ends of the pair of left and right rear forks 70 extending rearward from the seat post 71. A support shaft 75 including a seat 76 at an upper end thereof is mounted to the seat post 71 such that a position of the seat 76 in an upper-lower direction can be adjusted.

Returning to FIG. 2, a pair of crank pedals 79 are coupled to a left end and a right end of a crankshaft 83 which coaxially penetrates the support pipe 66 of the vehicle body frame 67. The stepping force (hereinafter referred to as a pedal stepping force) applied to the crank pedal 79 from the occupant is transmitted to the crankshaft 83 and input to an endless chain 82 via a drive sprocket 80. The chain 82 is wound around the drive sprocket 80 and a driven sprocket 81 provided on an axle of the rear wheel 78.

In the power unit 20, an output shaft 21 of the motor M and the crankshaft 83 are disposed in parallel. The crankshaft 83 is rotatably supported on an inner side of a cylindrical sleeve 26 via a first one-way clutch 28. At an outer peripheral side of the sleeve 26, a driven gear 26a meshing with a motor output gear 21a provided on the output shaft 21 of the motor M and the drive sprocket 80 are fixed. Therefore, a torque of the motor M is transmitted to the drive sprocket 80 via the motor output gear 21a, the driven gear 26a, and the sleeve 26. That is, the motor M is provided in parallel with the crank pedal 79.

A second one-way clutch 29 is provided between the driven sprocket 81 and the rear wheel 78.

In the electric bicycle 10 configured as described above, when the crank pedal 79 is pedaled in an advancing direction (also referred to as a forward rotation direction or a forward direction), the first one-way clutch 28 is engaged, and forward rotation power of the crankshaft 83 is transmitted to the drive sprocket 80 via the sleeve 26 and is further transmitted to the driven sprocket 81 via the chain 82. At this time, since the second one-way clutch 29 is also engaged, the forward rotation power transmitted to the driven sprocket 81 is transmitted to the rear wheel 78. In this way, the drive sprocket 80, the driven sprocket 81, and the chain 82 constitute a power transmission mechanism T that transmits the power input to the sleeve 26 to the rear wheel 78.

On the other hand, when the crank pedal 79 is pedaled in a reversing direction (also referred to as a reverse rotation direction or a reverse direction), the first one-way clutch 28 is not engaged, reverse rotation power of the crankshaft 83 is not transmitted to the sleeve 26, and the crankshaft 83 idles.

Further, for example, when the forward rotation power in the advancing direction (the forward rotation direction) is input from the rear wheel 78 as in the case where the electric bicycle 10 is pushed in the advancing direction, the second one-way clutch 29 is not engaged and the forward rotation power of the rear wheel 78 is not transmitted to the driven sprocket 81. Therefore, the rear wheel 78 rotates relative to the driven sprocket 81. On the other hand, when the reverse rotation power in the reversing direction (the reverse rotation direction) is input from the rear wheel 78 as in the case where the electric bicycle 10 is pushed in the reversing direction, the second one-way clutch 29 is engaged, and the reverse rotation power of the rear wheel 78 is transmitted to the driven sprocket 81, and is further transmitted to the drive sprocket 80 via the chain 82. At this time, since the first one-way clutch 28 is also engaged, the reverse rotation power transmitted to the drive sprocket 80 is transmitted to the crankshaft 83 and the crank pedal 79, and the crankshaft 83 and the crank pedal 79 are reversely rotated.

The power unit 20 is provided with a motor rotation speed sensor SE1 which detects a rotation speed of the motor M. The motor rotation speed sensor SE1 includes a magnet and a Hall IC provided at an outer peripheral portion of the output shaft 21 of the motor M.

The sleeve 26 is provided with a torque sensor SE2 which detects a pedal torque value Tq generated by the pedal stepping force. The torque sensor SE2 is a magnetic displacement detection type torque sensor disposed on an outer peripheral portion of the sleeve 26.

The rear fork 70 is provided with a rear wheel rotation speed sensor SE3. The rear wheel rotation speed sensor SE3 is, for example, a magnetic detection sensor, and detects a magnetic pulse when a magnet attached to a spoke of the rear wheel 78 passes through the sensor.

A cadence sensor SE4 is attached to a periphery of the drive sprocket 80. The cadence indicates a speed of rotation (motion) of the crank pedal 79. Since the drive sprocket 80 rotates integrally with the crank pedal 79 when the first one-way clutch 28 is engaged, the rotation of the drive sprocket 80 can be regarded as the rotation of the crank pedal 79. The cadence sensor SE4 is, for example, a magnetic detection sensor. The drive sprocket 80 is provided with eight magnets evenly spaced in a circumferential direction, and the cadence sensor SE4 detects a magnetic pulse when each of the magnets pass through the sensor.

Here, a relationship between the rotation speeds of respective members of the electric bicycle 10 and a gear ratio will be described.

In general, the gear ratio is a rotation speed of an output unit with respect to a rotation speed of an input unit. In the electric bicycle 10, the rotation speed of the input unit is the rotation speed of the sleeve 26, and the rotation speed of the output unit is the rotation speed of the rear wheel 78. In the present embodiment, since the gear ratio between the motor output gear 21a and the driven gear 26a is set to 1, the rotation speed of the sleeve 26 is equal to the rotation speed of the motor M detected by the motor rotation speed sensor SE1. The rotation speed of the sleeve 26 is equal to the rotation speed of the crankshaft 83 in a state in which the first one-way clutch 28 is engaged.

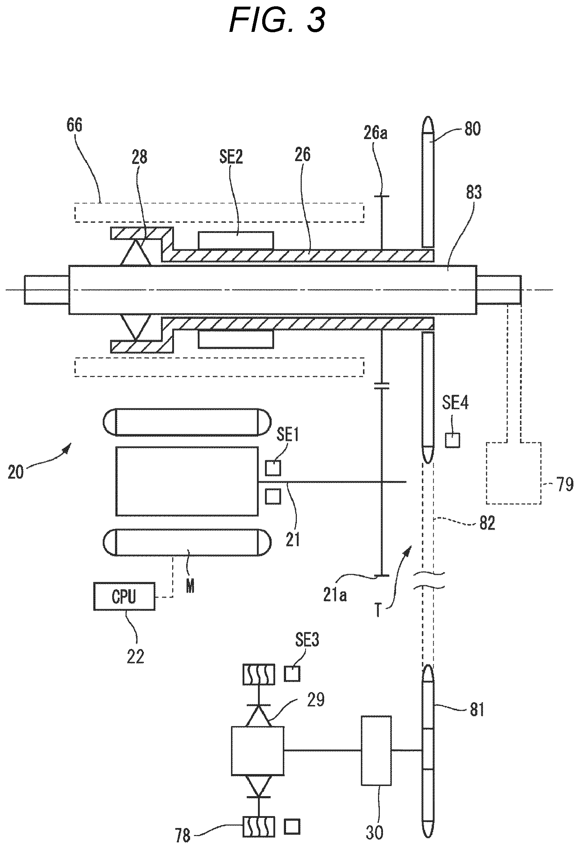

The rotation speed of the sleeve 26 is changed by a difference in outer diameter between the drive sprocket 80 and the driven sprocket 81. Further, as illustrated in FIG. 3, when a switching transmission device 30 is provided between the driven sprocket 81 and the rear wheel 78, the rotation speed of the sleeve 26 is further changed by the switching transmission device 30. These components constitute the power transmission mechanism T which transmits the power input to the sleeve 26 to the rear wheel 78. The rotation speed of the rear wheel 78 is detected by the rear wheel rotation speed sensor SE3.

Returning to FIG. 1, the battery unit 4 which supplies electric power to the power unit 20 is detachably fixed to the down pipe 69. The battery unit 4 includes a base 3 attached to an upper surface of the down pipe 69, and a battery 2 detachably attached to the base 3 and having a plurality of cells therein to accumulate energy (electric power).

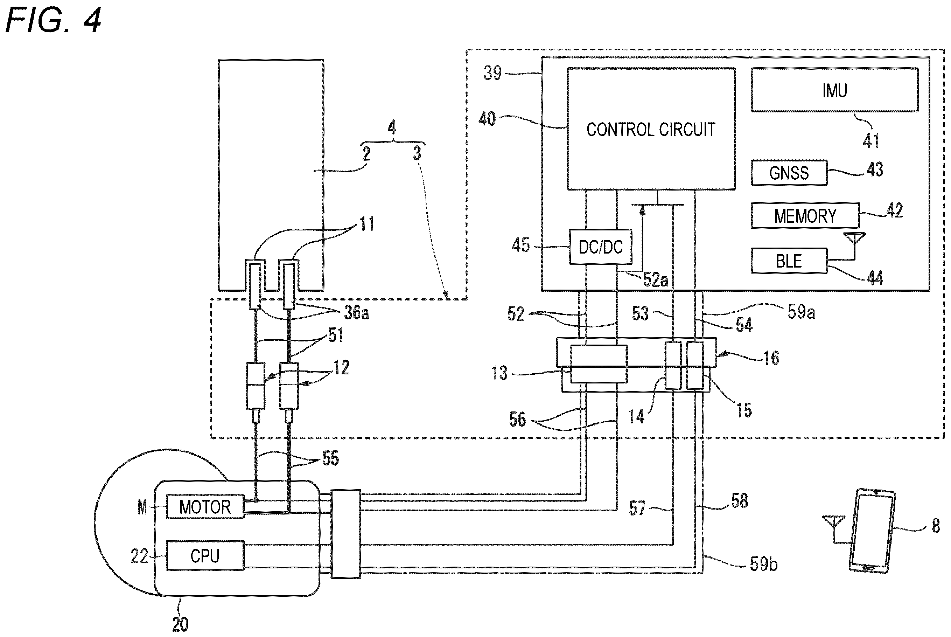

FIG. 4 is a diagram illustrating electric paths and communication paths of the power unit 20, the battery 2, and the control circuit 40 in the electric bicycle 10.

In the base 3, the control circuit 40, an inertial measurement unit (also referred to as IMU) 41, a memory 42, a global navigation satellite system (GNSS) unit 43, a Bluetooth low energy (BLE) unit 44, and a DC/DC converter 45 are arranged. In the following description, the control circuit 40, the IMU 41, the memory 42, the GNSS unit 43, the BLE unit 44, and the DC/DC converter 45 are also collectively referred to as a control unit 39.

The control circuit 40 includes, for example, a central processing unit (CPU) capable of executing various calculations, a random access memory (RAM) used as a work area of the CPU, and a storage medium such as a read only memory (ROM) storing various kinds of information.

The control circuit 40 calculates the speed of the electric bicycle 10 (hereinafter also referred to as the vehicle speed), the cadence, and the like from measurement values of the sensors SE1 to SE4 described above. For example, the control circuit 40 acquires a magnetic pulse detected by the rear wheel rotation speed sensor SE3 and calculates the vehicle speed from a pulse interval. In general, only one magnet is attached to the rear wheel 78, and thus the magnetic pulse is detected once per one rotation of the rear wheel 78. Therefore, assuming that the vehicle speed is V [km/h] and a circumferential length of the rear wheel 78 is Ct [m], the vehicle speed V [km/h] is expressed by the following equation (1).

$$V \text{ [km/h]} = \{Ct \text{ [m]/magnetic pulse interval (s)}\} \times 3600/1000 \qquad \dots (1)$$

The control circuit 40 acquires the magnetic pulse detected by the cadence sensor SE4 and calculates the cadence from the pulse interval. The cadence pulse is detected eight times per one rotation of the crank pedal 79. Therefore, cadence C [rpm] is expressed by the following equation (2).

$$C \text{ [rpm]} = \{1/(8 \times \text{magnetic pulse interval [s]}\} \times 60 \qquad \dots (2)$$

Although details will be described later, the control circuit 40 calculates a torque (also simply referred to as power) generated from the motor M of the power unit 20 so as to generate an appropriate assist force. The motor M operates in accordance with a CPU 22 of the power unit 20 which receives a calculation result (a drive request) from the control circuit 40.

The IMU 41 is, for example, a 9-axis sensor having functions of a 3-axis acceleration sensor, a 3-axis angular velocity sensor, and a 3-axis azimuth sensor, and detects a mounting posture of the control circuit 40.

The memory 42 is, for example, an SD card, and temporarily or permanently holds information, traveling data, and the like of the electric bicycle 10.

The GNSS unit 43 acquires position information of the electric bicycle 10.

The BLE unit 44 is a communication device for performing BT connection (Bluetooth (registered trademark) communication) with the portable terminal 8, the store tablet 60 to be described above, or the like.

The DC/DC converter 45 steps down a supplied DC voltage as in the form of DC to generate a power supply voltage for the control circuit 40, the inertial measurement unit 41, the memory 42, the GNSS unit 43, and the BLE unit 44. In FIG.4, a power supply line connecting the DC/DC converter 45 to the inertial measurement unit 41, the memory 42, the GNSS unit 43, and the BLE unit 44 is omitted.

The base 3 includes a male terminal 36a (a plug) electrically connected to a female terminal (a receptacle) 11 provided in the battery 2, a bullet pair 12 connected to the male terminal 36a via a power line 51, an electrical connector pair 13 electrically connected to the control circuit 40 via a power line 52 and the DC/DC converter 45, a communication connector pair 14 electrically connected to the control circuit 40 via a communication line 53, and a communication connector pair 15 communicably connected to the control circuit 40 via a communication line 54.

The bullet pair 12 is detachably connected to the battery 2 via the power line 51 and the male terminal 36a, and is also connected to the power unit 20 via a power line 55. The electrical connector pair 13 is connected to the DC/DC converter 45 via the power line 52, and is also connected to the power unit 20 via a power line 56. The power line 56 is configured to be supplied with electric power from the battery 2 through a branch from the power line 55 or the like. The communication connector pair 14 is connected to the control circuit 40 via the communication line 53, and is also connected to the power unit 20 via a communication line 57. The communication connector pair 15 is connected to the control circuit 40 via the communication line 54, and is also connected to the power unit 20 via a communication line 58. The communication method via the communication lines 54 and 58 is not particularly limited, but is, for example, universal asynchronous receiver transmitter (UART) communication.

The electrical connector pair 13, the communication connector pair 14, and the communication connector pair 15 constitute the same connector pair 16. The power line 52, the communication line 53, and the communication line 54 constitute a first harness 59a, and the power line 56, the communication line 57, and the communication line 58 constitute a second harness 59b. In this way, since the connector pairs are integrated by the connector pair 16, and the power lines and the communication lines are bundled and integrally routed, an assembly work can be facilitated.

In an electric system and a communication system configured as described above, electric power from the battery 2 is supplied to the motor M of the power unit 20, and electric power supplied from the power unit 20 and stepped down by the DC/DC converter 45 is supplied to the control circuit 40, the inertial measurement unit 41, the memory 42, the GNSS unit 43, and the BLE unit 44. The control circuit 40 receives electric power before being stepped down by the DC/DC converter 45 via an electric power branch line 52a, and outputs a power switch signal to the power unit 20 via the communication lines 53, 57. Then, in a state in which electric power is supplied to the control circuit 40, when there is an activation request for the power unit 20 from the portable terminal 8 of the user by application software for a user (hereinafter, also referred to as a user application) to be described later, a power switch signal is transmitted to the power unit 20 via the communication lines 53, 57, and the power unit 20 is activated. When the power unit 20 is activated, information exchange is performed between the power unit 20 and the control circuit 40 via the communication lines 54 and 58, and information exchange can be performed between the control circuit 40 and the portable terminal 8 of the user via the BLE unit 44.

[Assist Control]

Next, an assist control of the electric bicycle 10 will be described.

The control circuit 40 calculates the pedal stepping force based on the pedal torque value Tq which is an output value of the torque sensor SE2, and performs a pulse width modulation (PWM) control over the motor M so that an assist force determined by the pedal stepping force and an assist ratio corresponding to the vehicle speed of the electric bicycle 10 is generated. Specifically, the control circuit 40 causes the motor M to generate a target torque having a magnitude obtained by multiplying the pedal stepping force by the assist ratio.

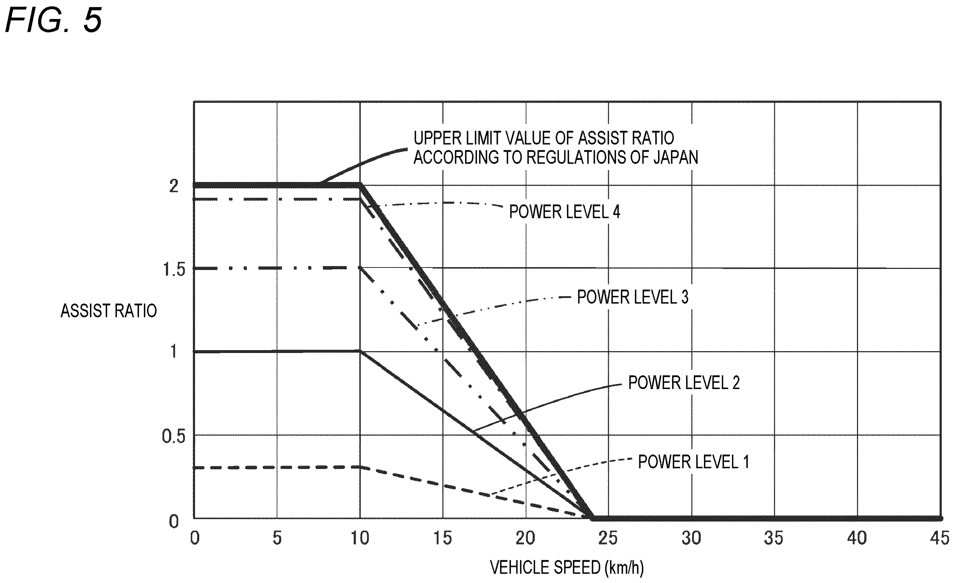

Here, the assist ratio is a ratio of a force that compensates for the pedal stepping force using the motor M to the pedal stepping force. FIG. 5 is a graph illustrating a relationship between the vehicle speed and the assist ratio. According to the regulations of Japan, as an upper limit of the assist ratio with respect to the vehicle speed, an upper limit value of the assist ratio is required to be 2 until the vehicle speed reaches 10 km/h, and the assist ratio is required to be gradually decreased from 2 to 0 when the vehicle speed is from 10 km/h to 24 km/h, as indicated by a thick solid line in FIG. 5.

The assist ratio is set to a value lower than the upper limit value (that is, the thick solid line in FIG. 5) and changes according to the vehicle speed. For example, the assist ratio takes a constant value until the vehicle speed reaches 10 km/h, and gradually decreases to zero until the vehicle speed is from 10 km/h to 24 km/h.

In the present embodiment, the assist ratio changes depending on a power level. The power level is divided into a plurality of stages, for example, four stages from level 1 to level 4. The assist ratio is largest at a power level 4 (one-dot chain line), and decreases in an order of a power level 3 (two-dot chain line), a power level 2 (thin solid line), and a power level 1 (broken line). The power level is manually set by an operation of the user or automatically set according to a traveling situation.

At the power levels 4, 3, 2 and 1, the assist ratios are constant at 1.9, 1.5, 1.0 and 0.3, respectively, until the vehicle speed reaches 10 km/h. At any level, the assist ratio gradually decreases to zero when the vehicle speed is from 10 km/h to 24 km/h, and becomes zero when the vehicle speed is 24 km/h or more. The assist ratios of the power levels 4, 3, 2, and 1 are obtained by multiplying the upper limit of the assist ratio in the regulations of Japan by 0.95 (= 1.9/2.0), 0.75 (= 1.5/2.0), 0.5 (= 1.0/2.0), and 0.15 (= 0.3/2.0), respectively.

When executing the assist control, the control circuit 40 acquires the assist ratio corresponding to the set power level and the current vehicle speed based on the graph of FIG. 5. Next, the control circuit 40 determines a target torque from the pedal stepping force and the assist ratio.

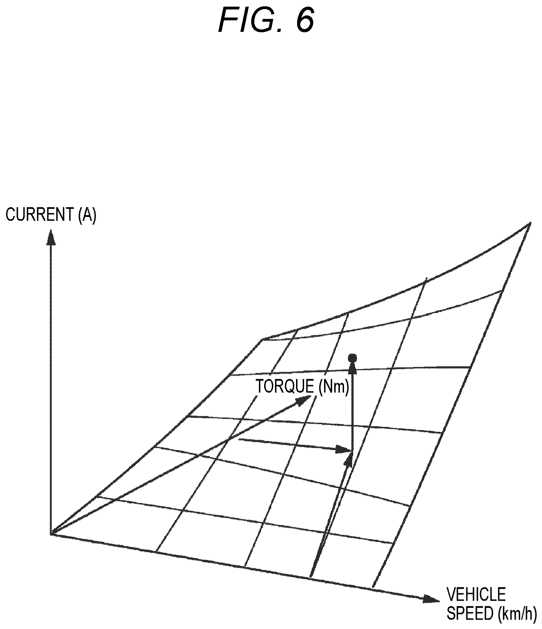

Next, the control circuit 40 sets a target current for the motor M based on a three-dimensional control map as illustrated in FIG. 6 in which the target current corresponding to the vehicle speed and the target torque is set. The control circuit 40 uses a value obtained by multiplying the target current by a predetermined filter function (for example, an infinite impulse response (IIR) filter) as an instruction current and transmits the instruction current to the CPU 22 of the power unit 20 via the communication lines 54 and 58. The motor M generates the torque based on the instruction current based on a command from the CPU 22.

As the instruction current approaches the target current over time, the torque generated from the motor M approaches the target torque. When the instruction current reaches the target current or can be approximated as reaching the target current, the torque generated from the motor M reaches the target torque or can be approximated as reaching the target torque.

Further, the control circuit 40 is configured to be able to change responsiveness of the change when the magnitude of the power (a generated torque) of the motor M is changed. "When the magnitude of the power of the motor M is changed" includes, for example, when the target torque increases in response to an increase in the pedal torque value Tq (the pedal stepping force), when the vehicle speed changes and the assist ratio is changed, when the power level is switched, and the like.

As described above, the control circuit 40 applies a predetermined filter function to the target current to the motor M to obtain the instruction current. Since the responsiveness of the power change of the motor M changes depending on a time constant T of the filter function, the responsiveness can be changed by changing the time constant T.

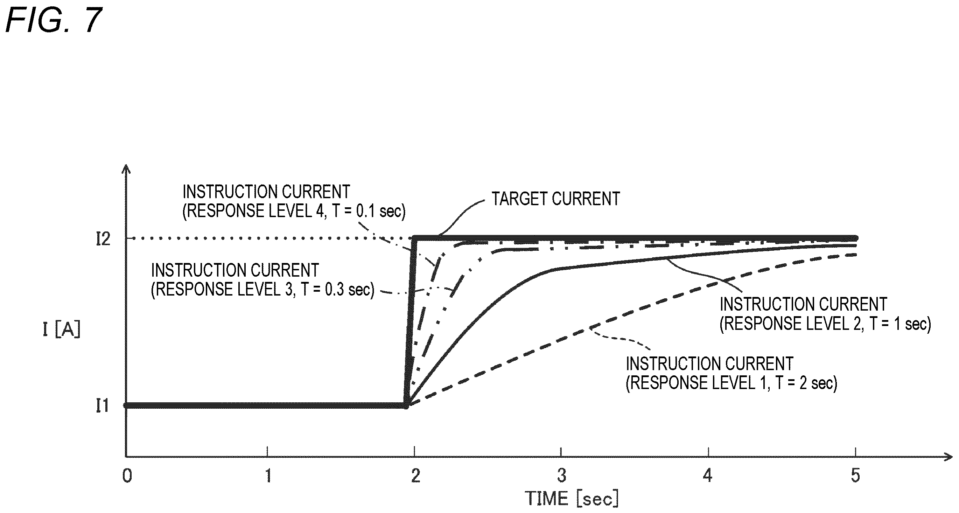

FIG. 7 is a graph illustrating an example of the responsiveness of the instruction current when the magnitude of the power of the motor M is changed in a case where the IIR filter is used as the filter function. In the graph, I is a target current or an instruction current at a predetermined time point, I1 is a target current before the magnitude of the power of the motor M is changed, and I2 is a target current after the magnitude of the power of the motor M is changed. In the graph, a thick solid line indicates the target current, a one-dot chain line indicates the instruction current when the time constant T = 0.1 sec, a two-dot chain line indicates the instruction current when the time constant T = 0.3 sec, a thin solid line indicates the instruction current when the time constant T = 1 sec, and a broken line indicates the instruction current when the time constant T = 2 sec.

FIG. 7 illustrates an example in which the target current is switched from I1 to I2 at a time point 2 sec, and it is assumed that the motor M is driven based on the target current I1 before the time point 2 sec. The smaller the time constant T, the higher the responsiveness, and the more quickly instruction current approaches the target current I2. That is, since the magnitude of the power of the motor M is immediately changed, it is possible to assist in quick response to the input of the crank pedal 79. On the other hand, the larger the time constant T, the lower the responsiveness, and the more slowly the instruction current approaches the target current I2. That is, since the magnitude of the power of the motor M is slowly changed, it is possible to perform gentle assist without sudden acceleration.

In the present embodiment, the responsiveness when the time constant T = 0.1 sec, 0.3 sec, 1 sec, and 2 sec is assumed to be response levels of 4, 3, 2, and 1, respectively. The response level 4 has the highest responsiveness, and the responsiveness decreases in an order of the response levels 3, 2, and 1. Similarly to the power level, the response level is manually set by an operation of the user or automatically set according to the traveling situation.

The electric bicycle 10 is configured to be switchable among a plurality of traveling modes. The plurality of traveling modes include, for example, a standard mode and a sport mode. The sport mode is a mode in which the responsiveness of the power change of the motor M described above is higher than in the standard mode, that is, the sport mode is a mode in which a motion performance of the electric bicycle 10 is higher than in the standard mode.

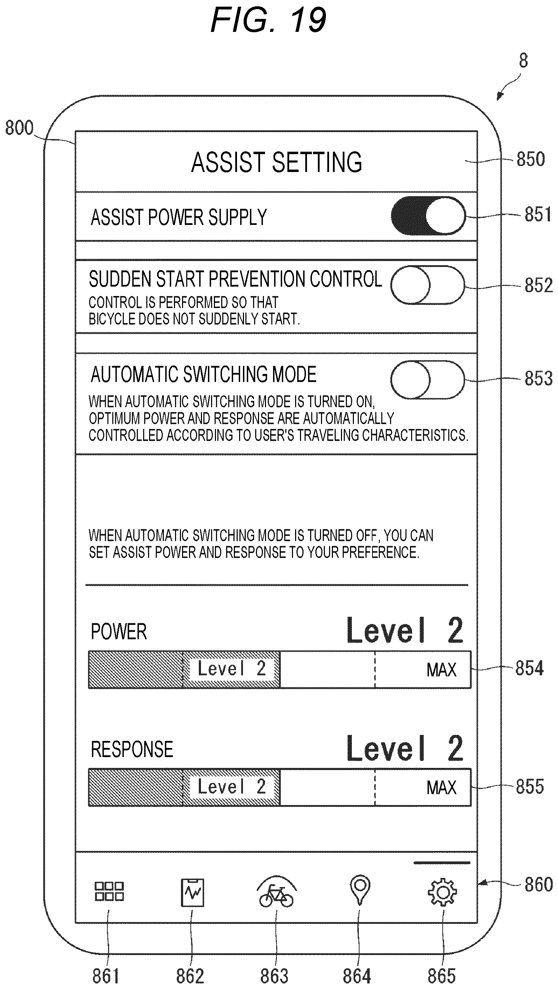

Switching between these modes can be performed by, for example, a user application as illustrated in FIG. 19.

The plurality of traveling modes may include other modes different from the standard mode and the sport mode. For example, the plurality of traveling modes may include a battery save mode. For example, in the battery save mode, in order to reduce the power consumption of the battery 2, the target torque generated by the motor M is made smaller than in the standard mode and the sport mode.

[Correlation between User, Sales Store, and Server]

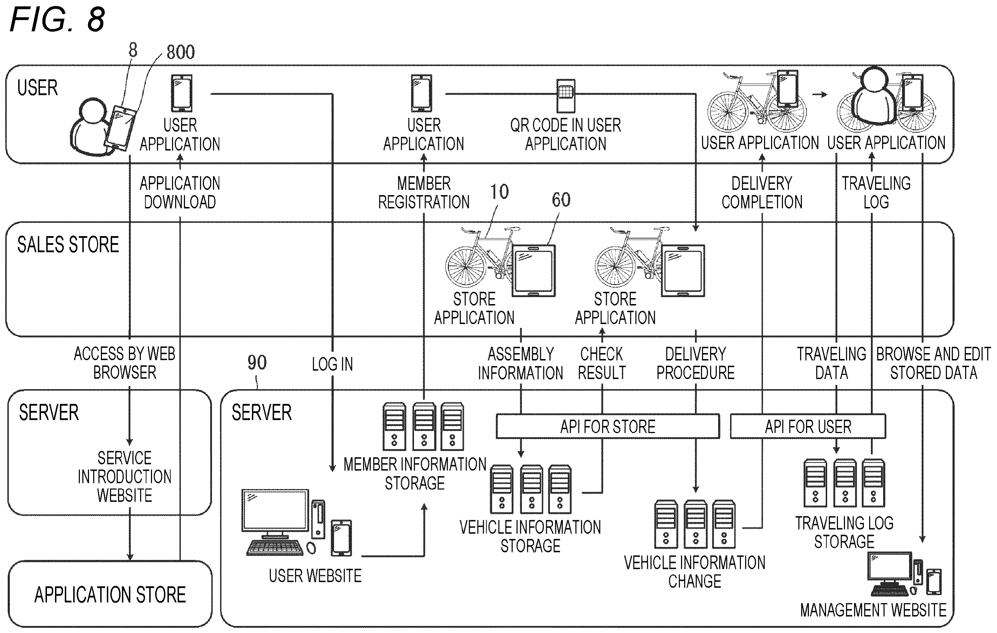

Next, a relationship among a sales store that manufactures and sells the electric bicycle 10, a user (also referred to as an occupant of the electric bicycle 10) who purchases and uses the electric bicycle 10, and a server 90 that collects and stores information on the electric bicycle 10 and performs necessary processing and the like will be described with reference to FIG. 8.

The sales store attaches the assist device to, for example, a new non-electric bicycle purchased from a manufacturer of a vehicle body (not illustrated) to manufacture the electric bicycle 10. The sales store sells the electric bicycle 10 to the user. The sales store may exhibit and sell the assist device in its store, and for example, the assist device may be attached to a non-electric bicycle brought in by the user.

The user is a person who desires to purchase the electric bicycle 10, and pays the price to the sales store when purchasing the electric bicycle 10. The user downloads the user application to the portable terminal 8 owned by the user, and uses the electric bicycle 10 while activating the user application.

The server 90 collects and stores information on the electric bicycle 10 used by the user, and performs necessary processing and the like. An operator of the user application or application software (hereinafter also referred to as a store application) for a store possesses and manages the server 90. The server 90 communicates with the control circuit 40 of the electric bicycle 10 or the portable terminal 8 of the user via the user application to exchange traveling data and the like, and communicates with the store tablet of the sales store via the store application to exchange vehicle data and the like. The server 90 may be a distributed server including a plurality of server devices or a distributed virtual server (a cloud server) created in a cloud environment.

Next, a flow until the user uses the electric bicycle 10 will be described.

First, the user downloads the user application to the portable terminal 8 owned by the user. The user application is downloaded before the electric bicycle 10 is purchased (that is, before delivery from the sales store). When downloading, the user accesses a service introduction website of the user application, moves from the service introduction website to an application store, and downloads the user application from the application store. The user may download the user application by directly accessing the application store without accessing the service introduction website.

After downloading the application, the user accesses a user website of the server 90 on the user application, and performs a member registration procedure necessary for using the user application. Specifically, the user inputs user information such as the name, sex, address, mobile number, and mail address of the user. The server 90 stores the user information input by the user and completes member registration of the user. After the member registration, a user ID unique to the user is given to the user application, and the user ID is stored in the server 90 in association with the user information. The information on the user ID and password for logging in is account information necessary for logging in to the server 90 from the portable terminal 8. The user may directly access the user website to perform the member registration procedure instead of using the user application.

The sales store first introduces a store application on the store tablet 60. For example, the sales store accesses the server 90 from the store tablet 60 to download the store application or physically connects a storage medium storing an execution file of the store application to the store tablet 60 to introduce the store application to the store tablet 60.

The store application and the server 90 are linked via an application programming interface (API) for a store. Various processing (for example, screen display, various operations, and the like) in the store application are executed by calling the API for a store.

When assembling the non-electric bicycle and the assist device, a staff of the sales store inputs assembly information to the store application. The assembly information has, for example, vehicle model information and information such as an identification number for identifying a component mounted on the vehicle body. After completing the assembly of the electric bicycle 10, the staff member confirms whether the assembly work is properly performed in check items, and further confirms the operation of the electric bicycle 10. The assembly information has information on the confirmation of the assembly work and the confirmation of the operation of the electric bicycle 10. The assembly information input by the staff member is stored in the server 90 as vehicle information.

After checking the assembly work of the electric bicycle 10 and confirming the operation of the electric bicycle 10, results thereof are displayed on the store tablet 60. When the results are acceptable, the electric bicycle 10 can be delivered (sold) from the sales store to the user.

When purchasing the electric bicycle 10 from the sales store, the user causes a display 800 of the portable terminal 8 to display a QR code (registered trademark) including the user information in the user application. The sales store reads the QR code of the user with a camera built in the store tablet 60 and acquires the user information. Subsequently, the sales store performs a delivery procedure in the store application, and changes an owner entity of the electric bicycle 10 from the sales store to the user. At this time, the owner entity in the vehicle information stored in the server 90 is changed from the sales store to the user. In other words, in the server 90, a subject having a right to own the electric bicycle 10 (hereinafter also referred to as ownership) is rewritten from the sales store to the user, and the ownership of the electric bicycle 10 belongs to the user. The electric bicycle 10 is delivered to the user, that is, the purchase of the electric bicycle 10 is completed.

The user activates the user application when using the electric bicycle 10. When using the electric bicycle 10, the portable terminal 8 of the user acquires traveling data, error information on each component, and the like from the control circuit 40. Further, the server 90 acquires the traveling data, the error information on each component, and the like from the control circuit 40 attached to the portable terminal 8 and/or the vehicle body, and stores them as a traveling log. The user can access the server 90 on the user application and confirm the traveling log. The user can access a management website of the server 90 and browse and edit the data (member information, vehicle information, traveling logs, and the like) stored in the server 90. The user application and the server 90 are also linked via the API for a user, and various processing (for example, screen display, various operations, and the like) in the user application are executed by calling the API for a user.

[Configurations of Portable Terminal, Control Circuit, and Server]

(Portable Terminal)

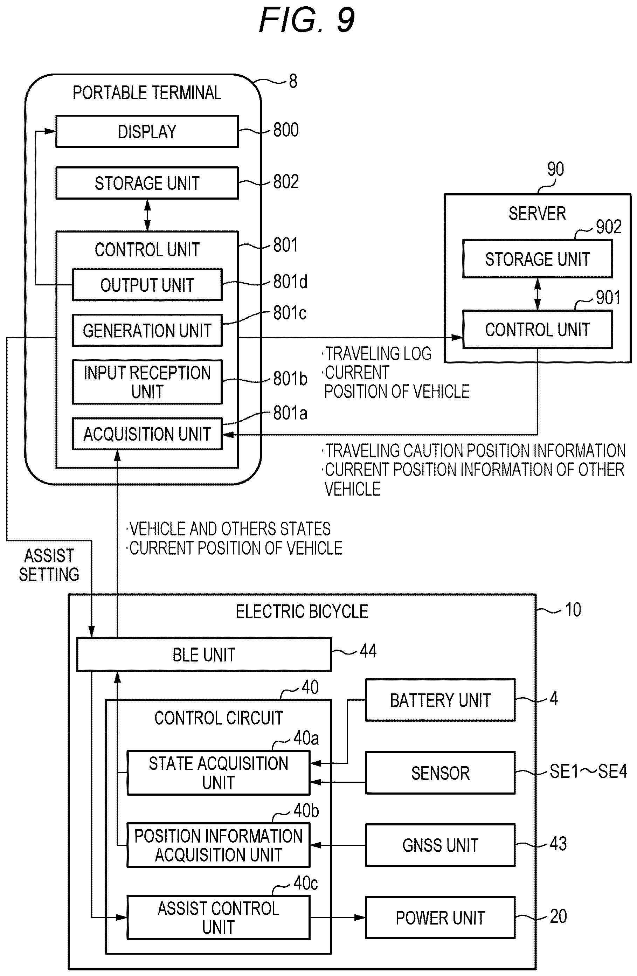

Next, functional configurations of the portable terminal 8 of the user, the control circuit 40 installed in the electric bicycle 10, and the server 90 that stores and manages various information will be described with reference to FIG. 9. Arrows in FIG. 9 indicate transmission of predetermined information and a flow of commands.

The portable terminal 8 includes the display 800 that displays various information, a control unit 801 including a CPU capable of executing various calculations and a RAM used as a work area of the CPU, and a storage unit 802 such as a ROM that stores various information.

The display 800 is, for example, a touch screen capable of detecting a touch operation on a display area. The display 800 functions as an interface through which the user inputs information by the touch operation and through which the user confirms information displayed on the display 800.

The control unit 801 transmits an instruction such as an assist setting to the electric bicycle 10, and transmits a traveling log acquired from the electric bicycle 10 and information related to the current position of the electric bicycle 10 by communicating with the server 90. The control unit 801 includes an acquisition unit 801a, an input reception unit 801b, a generation unit 801c, and an output unit 801d.

The acquisition unit 801a communicates with the control circuit 40 of the electric bicycle 10 to acquire various information related to the electric bicycle 10 including the speed of the electric bicycle 10, the state of charge of the battery 2, the current geographical position of the electric bicycle 10, and the like. In addition, the acquisition unit 801a communicates with a control unit 901 of the server 90 and acquires position information to be careful during traveling and position information on a friend vehicle to be described later.

The input reception unit 801b receives an input by a touch operation on the display 800, an input from a button (not illustrated) provided in the portable terminal 8, and a voice input.

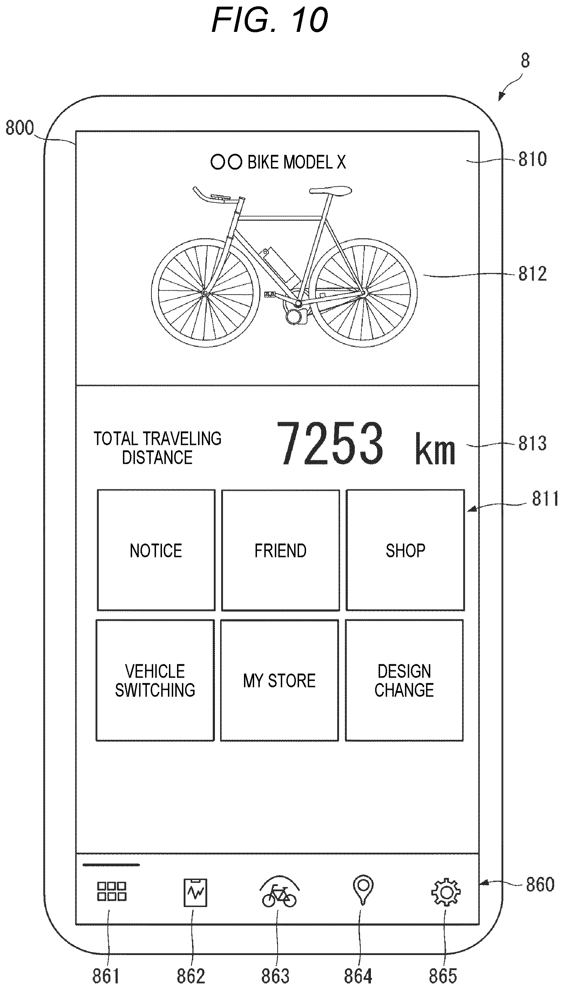

The generation unit 801c generates display information for displaying the information acquired by the acquisition unit 801a on the display 800, and performs predetermined processing according to the input received by the input reception unit 801b. Here, the display information is information for displaying each screen (FIGS. 10 to 19) on the user application. A part of the processing performed by the generation unit 801c (for example, generation of the display information) may be performed by, for example, the control unit 901 of the server 90 to be described later.

The output unit 801d outputs (hereinafter, also referred to as "display") the display information generated by the generation unit 801c to the display 800. The output unit 801d changes the screen displayed on the display 800 in accordance with the input received by the input reception unit 801b.

(Control Circuit)

The control circuit 40 of the electric bicycle 10 includes a state acquisition unit 40a, a position information acquisition unit 40b, and an assist control unit 40c.

The state acquisition unit 40a is wiredly or wirelessly connected to each of the sensors SE1 to SE4 installed on the electric bicycle 10, a current sensor (not illustrated) provided in the battery unit 4, and the like, and acquires measurement values thereof.

The measurement values include not only the rotation speed of the motor M, the pedal torque value Tq, the rotation speed of the rear wheel 78, the cadence C, and the current value directly obtained from the sensors SE1 to SE4 and the current sensor, but also values indirectly obtained by calculation from these values. For example, the measurement values include the speed of the electric bicycle 10, the output of the motor M, the output torque of the motor M, the output of the crank pedal 79, the gear stage (gear ratio) of the switching transmission device 30, and the like. The measurement value includes a state of charge (SOC) or a state of health (SOH) of the battery 2. For example, the state of charge of the battery 2 is calculated based on the current value acquired from the current sensor. The state of health of the battery 2 is calculated based on an internal resistance measured and stored in a memory (not illustrated) provided in the battery unit 4.

The state acquisition unit 40a transmits the measurement value to the portable terminal 8 via the BLE unit 44. The state acquisition unit 40a may transmit the measurement value to the server 90.

The position information acquisition unit 40b acquires the position information on the electric bicycle 10 acquired by the GNSS unit 43 installed in the electric bicycle 10. Then, the position information acquisition unit 40b transmits the position information of the electric bicycle 10 to the portable terminal 8 via the BLE unit 44. The position information acquisition unit 40b may transmit the position information to the server 90.

The assist control unit 40c controls the power unit 20 to generate an appropriate assist force from the motor M. When the input reception unit 801b of the portable terminal 8 receives the input of the change of the power level and/or the response level, the control unit 801 transmits the input received by the input reception unit 801b to the control circuit 40. The assist control unit 40c acquires a command to change the power level or the response level via the BLE unit 44, and controls the power unit 20 according to the command.

(Server)

The server 90 includes the control unit 901 implemented by the CPU executing a program stored in a storage device of the server 90, and a storage unit 902 that stores a processing result of the control unit 901, information from the portable terminal 8, and the like. The server 90 can directly communicate with the control circuit 40 of the electric bicycle 10.

The server 90 acquires the traveling log of the electric bicycle 10 and the information related to the current geographical position (hereinafter, also simply referred to as current position information) from the portable terminal 8, and stores and manages them.

The server 90 also communicates with a terminal used by another user different from the electric bicycle 10, and acquires current position information of the electric bicycle of the other user. In addition, the server 90 stores, for example, information, which is acquired from the outside, related to a geographical position to be careful during vehicle-travel. The server 90 transmits, to the portable terminal 8 of the user, the position information of the other electric bicycle and the information related to the geographical position to be careful during vehicle-travel, based on a predetermined condition.

[User Application]

Next, details of the user application will be described with reference to FIGS. 10 to 19.

The user application is activated, for example, by a touch operation on an icon of the user application displayed on a home screen of the portable terminal 8 or by attaching a near field communication (NFC) tag linked with the user application to the electric bicycle 10 and bringing the portable terminal 8 close to the NFC tag.

After the user application is activated, the user inputs his/her account information (the user information, the password, and the like) to the portable terminal 8 and performs a login operation. The portable terminal 8 makes a login request to the server 90 via the network based on the account information of the user, and when the login is permitted from the server 90, the portable terminal 8 logs in to the server 90. A login mode using the portable terminal 8 is not limited thereto. For example, the portable terminal 8 may log in to an application executed on the server 90, for example, an application executed by calling a predetermined API.

When the login is completed, the portable terminal 8 and the control circuit 40 are connected to each other, and the portable terminal 8 is permitted to control the control circuit 40, acquire traveling data, and the like. The connection between the portable terminal 8 and the control circuit 40 is maintained in a login state.

The login state is maintained when an elapsed time from the predetermined calculation start time is within a predetermined time (for example, 24 hours) even after the user application ends or after the transition to the offline environment in which radio waves are difficult to be connected. The calculation start time is, for example, a time when the server 90 and the portable terminal 8 last communicate with each other, a time when the server 90 permits the user to log in, a time when the server 90 last performes processing in response to a request from the portable terminal 8, or the like. On the other hand, the login state is released by a logout operation of the user, a lapse of the predetermined time from the calculation start time, or the like, and becomes a logout state.

When the user application is activated in the login state, the portable terminal 8 communicates with the server 90 via the network. In particular, while the electric bicycle 10 is traveling, the portable terminal 8 transmits information such as traveling data to the server 90 at predetermined time intervals.

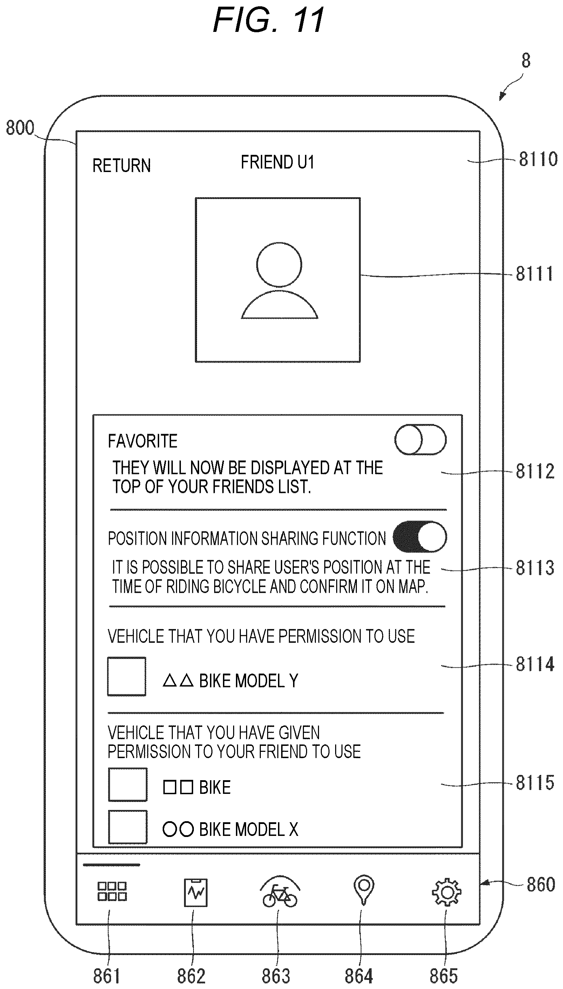

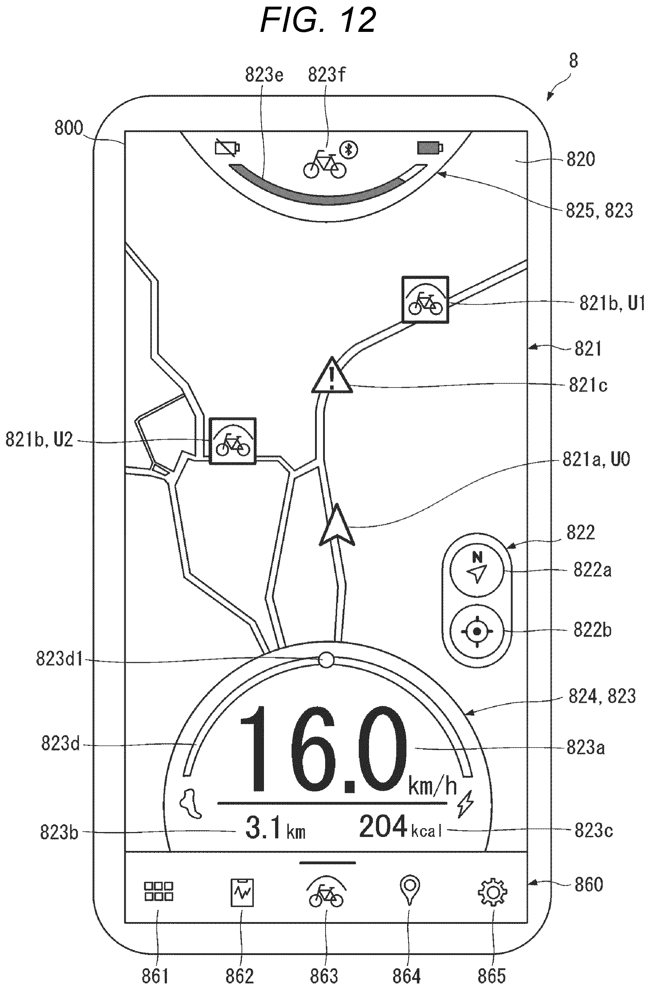

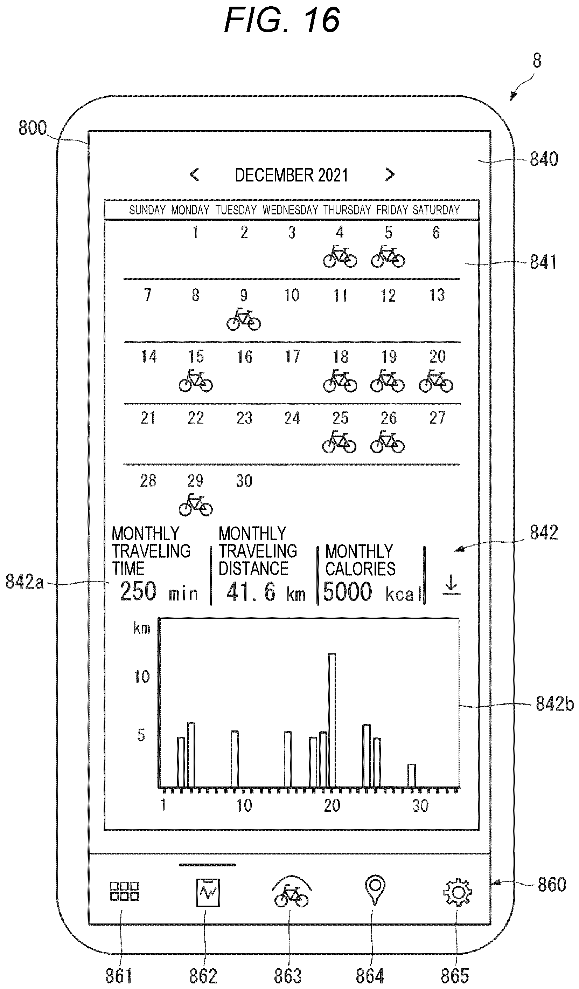

Next, functions of the user application will be described. The user application has an application setting function capable of performing general settings and the like, a traveling state display function capable of confirming a traveling state, a map, and the like when riding the electric bicycle 10, a log display function capable of confirming a past traveling log, and an assist setting function capable of performing settings of the assist control. The application setting function, the traveling state display function, the log display function, and the assist setting function are realized by the application setting screen 810 (FIGS. 10 and 11), the traveling screens 820, 820A (FIGS. 12 to 14), the traveling log screen 840 (FIGS. 16 to 18), and the assist setting screen 850 (FIG. 19) displayed on the display 800 of the portable terminal 8, respectively.

A tab switching area 860 is provided below each of the screens 810, 820, 820A, 840, and 850. In the tab switching area 860, an application setting tab 861, a traveling log tab 862, a traveling screen tab 863, a map screen tab 864, and an assist setting tab 865 are displayed from the left side in a selectable manner. For example, when any one of the application setting tab 861, the traveling log tab 862, the traveling screen tab 863, the map screen tab 864, and the assist setting tab 865 is selected by a touch operation of the user, the output unit 801d displays the application setting screen 810, the traveling log screen 840, the traveling screen 820 (or the traveling screen 820A), a map screen 830 to be described later, or the assist setting screen 850 on the display 800.

(Application Setting Screen)

FIG. 10 illustrates an example of the application setting screen 810. When the application setting tab 861 of the tab switching area 860 is selected, the output unit 801d displays the application setting screen 810 on the display 800.

The application setting screen 810 includes an icon display area 811 that displays a plurality of icons that can be switched to a screen for performing a general setting or the like of the user application, an image display area 812 that displays an image or the like of the electric bicycle 10 owned by the user, and a distance display area 813 that displays the total traveling distance of the electric bicycle 10.

In the icon display area 811, six icons, specifically, icons displayed as "notice", "friend", "shop", "vehicle switching", "my store", and "design change" are displayed.

When the icon of "notice" is selected, the output unit 801d displays various kinds of information to be notified to the user, such as a notification prompting an application update and a notification indicating that a friend has been added, which will be described later.

When the icon of "friend" is selected, the output unit 801d displays a list of other users registered as friends on the user application and detailed information of the other users. The friend is another user who has downloaded a user application and can permit sharing of predetermined information with the user of the electric bicycle 10. In the following description, the user of the electric bicycle 10 may be represented as a user U0, and another user who owns another electric bicycle and is registered as a friend of the user U0 may be represented as a friend U1.

When registering the friend U1 in the user application, the user U0 reads the QR code (registered trademark) displayed on the portable terminal of the friend U1 with a camera built in the portable terminal 8. Thus, the acquisition unit 801a acquires the user information on the friend U1 and stores the user information in the storage unit 802.

FIG. 11 is an example of a friend detail screen 8110 displayed when the friend U1 is selected from the friend list displayed by selecting the icon of "friend". The friend detail screen 8110 includes an area 8111 in which a profile image of the friend U1 is displayed, an area 8112 including a favorite registration switch for displaying the friend U1 as a favorite friend in an upper portion of the friend list, an area 8113 including a position information sharing switch for sharing the position information on the user (user U0) with the friend U1, an area 8114 in which an electric bicycle owned by the friend U1 and permitted to be used by the user U0 is displayed, and an area 8115 in which an electric bicycle owned by the user U0 and permitted to be used by the friend U1 is displayed.

When the position information sharing switch in the area 8113 is turned on, the control unit 801 transmits to the server 90 that the current position information of the user U0 can be shared with the friend U1. When the user U0 is riding the electric bicycle 10, the server 90 transmits the current position information of the user U0 to the portable terminal of the friend U1, and information indicating the current position information of the user U0 is displayed on a traveling screen or a map screen of the portable terminal of the friend U1. On the other hand, when the position information sharing switch is turned off, information indicating the current position information of the user U0 is not displayed on the traveling screen or the map screen of the portable terminal of the friend U1.

Similarly, in a case where the position information sharing switch for sharing the current position information of the friend U1 with the user U0 is turned on on the user application of the friend U1, when the friend U1 is riding the electric bicycle, the information indicating the current position information of the friend U1 (specifically, a friend position icon 821b to be described later) is displayed on the traveling screens 820, 820A or the map screen 830 of the portable terminal 8 owned by the user U0.

Returning to FIG. 10, when the icon of "shop" is selected, the output unit 801d displays a screen for purchasing an additional function of the user application. The additional function is, for example, a change in a screen design of the user application, an increase in the upper limit value of the number of registered friends, or an extension to traveling log periods that can be stored. The purchase of the additional function is not limited to a purchase type and may be a regular purchase type.

When the icon of "vehicle switching" is selected, the output unit 801d displays a list of vehicles owned by the user and detailed information thereof in a selectable manner. When the vehicle owned by another user is permitted to be used, the vehicle owned by the other user is also displayed in a selectable manner. When changing the selected vehicle to be ridden from the electric bicycle 10, the user selects the vehicle to be ridden from a list of vehicles. Accordingly, the output unit 801d displays information related to the vehicle after the change on, for example, the image display area 812, the distance display area 813, and the traveling log screen 840, which will be described later. Hereinafter, a case where the electric bicycle 10 owned by the user U0 is selected will be described.

When the icon of "my store" is selected, the output unit 801d displays the information on the store where the electric bicycle 10 was purchased. Examples of the information on the store include an address, a telephone number, and a uniform resource locator (URL) of a website.

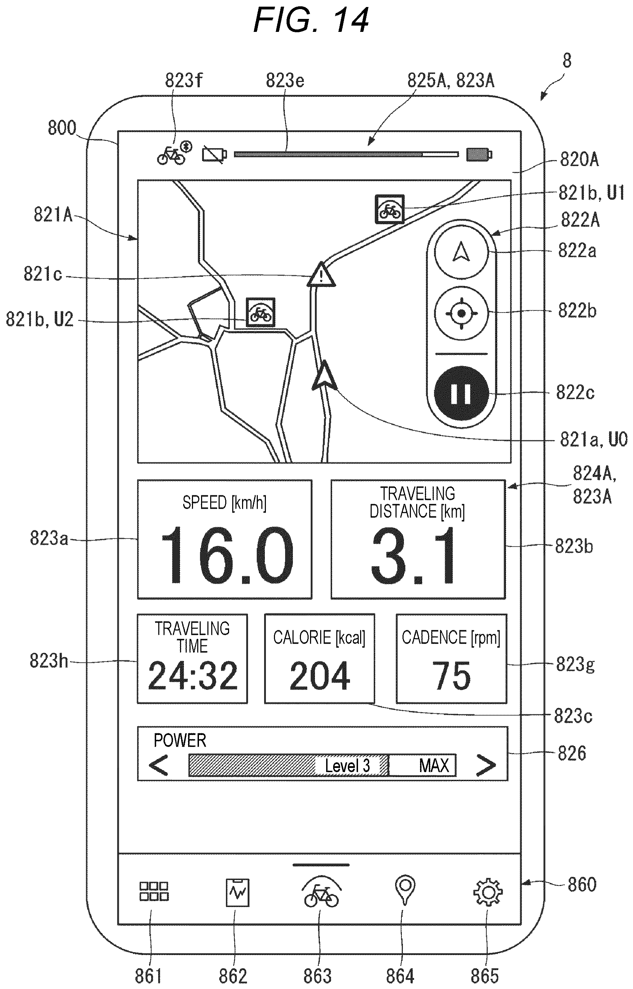

When the icon of "design change" is selected, the output unit 801d displays a list of screen designs of the user application in a selectable manner. For example, the user can select a standard design of the traveling screen 820 illustrated in FIG. 12 or a sport design of the traveling screen 820A illustrated in FIG. 14 as the design of the traveling screen. A new screen design can be added by additionally purchasing a new design from the icon of "shop".

In the image display area 812, an image of the vehicle selected in the "vehicle switching" described above is displayed. In the image display area 812, a vehicle type name or a model name may be displayed.

The distance display area 813 displays the total traveling distance included in the past traveling log stored in the storage unit 902 of the server 90. The total traveling distance displayed in the distance display area 813 is, for example, the total traveling distance of the vehicle selected in "vehicle switching".

(Traveling Screen)

FIG. 12 illustrates an example of the traveling screen 820 that is the standard design. The output unit 801d displays the traveling screen 820 on the display 800 when the electric bicycle 10 is set to the standard mode described above and the traveling screen tab 863 of the tab switching area 860 is selected.

The traveling screen 820 includes a map area 821 that displays map information, an operation area 822 in which a predetermined operation can be performed on the traveling screen 820, and a state display area 823 in which the traveling state of the electric bicycle 10 and the like is displayed.

The map information is displayed on the entire traveling screen 820, and the operation area 822 and the state display area 823 are displayed to overlap the map information. The map area 821 corresponds to a portion where the operation area 822 and the state display area 823 do not overlap in the map information displayed on the entire traveling screen 820.

When the touch operation of the user is input to the map information, the output unit 801d displays the map information in the map area 821 by enlarging or reducing the map information, or displays the map information by moving the displayed area.

The map information is stored in the storage unit 902 of the server 90. The control unit 801 of the portable terminal 8 communicates with the server 90, refers to the map information stored in the storage unit 902, and displays the map information in the map area 821. The control unit 801 of the portable terminal 8 may download the map information from the server 90, store the map information in the storage unit 802, and display the map information in the map area 821 with reference to the map information stored in the storage unit 802.

The traveling screen 820 includes information related to the current position of the electric bicycle 10 in the map area 821. Specifically, the output unit 801d displays a current position icon 821a, which is information indicating the current position of the electric bicycle 10, in the map area 821. In the present embodiment, the output unit 801d displays the map information of a predetermined geographical range centered on the current position icon 821a in the map area 821. By displaying the current position icon 821a in the map area 821, the user U0 can grasp the current position while riding the electric bicycle 10. The output unit 801d may not necessarily display the current position icon 821a as the information related to the current position of the electric bicycle 10, and may be configured to display a center of the traveling screen 820 (or the map area 821) as the current position of the electric bicycle 10, for example.

In the present embodiment, the information related to the current position of the electric bicycle 10 is acquired from the GNSS unit 43 installed in the electric bicycle 10. Therefore, it is possible to prevent the consumption of the battery built in the portable terminal 8, for example, as compared with a case where the information related to the current position is acquired from the GPS sensor built in the portable terminal 8. The information related to the current position of the electric bicycle 10 can be acquired from the GPS sensor attached to the electric bicycle 10 or built in the portable terminal 8 carried by the user U0. The information related to the current position of the electric bicycle 10 can be acquired using the GNSS unit 43 of the electric bicycle 10 and the GPS sensor of the portable terminal 8 in combination. For example, the portable terminal 8 may acquire the information related to the current position mainly from the GNSS unit 43 of the electric bicycle 10, and may acquire the information from the GPS sensor of the portable terminal 8 when the information cannot be acquired from the GNSS unit 43.

The traveling screen 820 includes information related to the current geographical position of the registered friend (also simply referred to as current position information) in the map area 821. Specifically, the output unit 801d displays a friend position icon 821b, which is information indicating the current position of the electric bicycle of the registered friend, in the map area 821. In the present embodiment, the output unit 801d displays, in the map area 821, the map information including the friend position icons 821b of the friend included in the predetermined geographical range centered on the current position icon 821a. The traveling screen 820 in FIG. 12 displays the friend position icons 821b of two friends U1, U2 registered as friends with the user U0 of the electric bicycle 10.

The position information of the friend will be described in detail. When the friends U1, U2 are each riding the electric bicycle, the portable terminal of each of the friends U1, U2 performs BT communication with a wireless communication device of the electric bicycle, and acquire the current position information of the electric bicycle from the GNSS unit installed in the electric bicycle. The portable terminals of the friends U1, U2 communicate with the server 90, and the server 90 acquires the current position information of the electric bicycles of the friends U1, U2. When the friends U1, U2 permit the user U0 to share the position information, the user U0 of the electric bicycle 10 can confirm the current position information of the friends U1, U2 on the traveling screen 820. The current position information of the friends U1, U2 is not limited to information obtained based on the GNSS unit installed on the electric bicycle, and may be information obtained based on the GPS sensor built in the portable terminal attached to the electric bicycle or the portable terminals carried by the friends U1, U2.

Even when the friends U1, U2 each ride in a vehicle that does not cooperate with the user application (for example, a bicycle that is not electrically driven), the position information of the friends U1, U2 may be shared with the user U0. In such a configuration, the current position information of the friends U1, U2 is obtained by the portable terminals of the friends U1, U2 based on the GPS sensor.

The current position information of the friends U1, U2 is shared with the user U0 while the friends U1, U2 are each riding on the electric bicycle and during a predetermined period from a point in time when the riding of the friends U1, U2 is no longer confirmed, and is permitted to be displayed on the display 800 of the portable terminal 8 of the user U0.

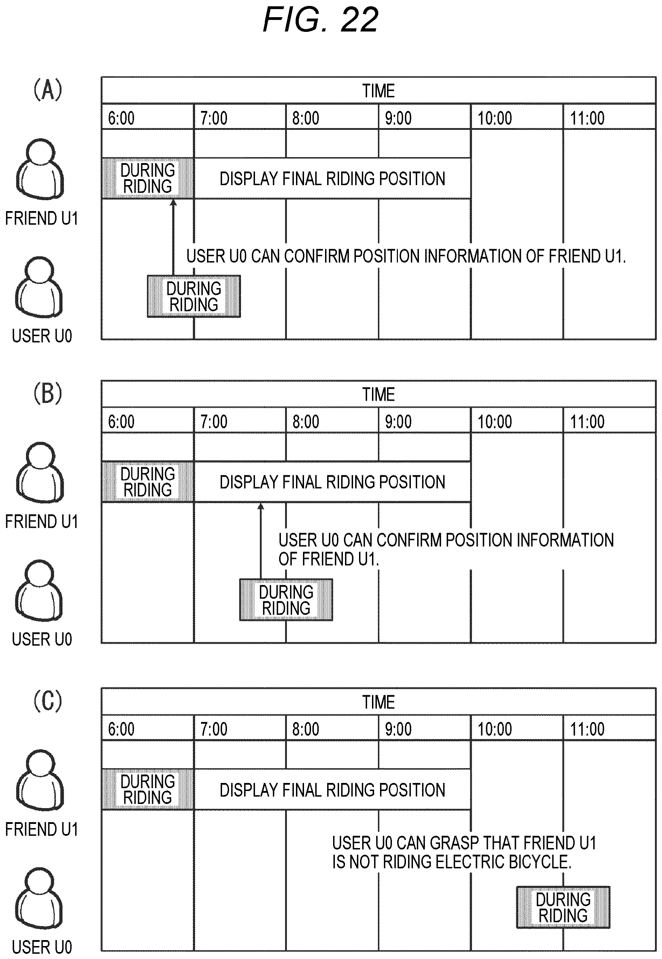

To explain in more detail using FIG. 22, as illustrated in (A) in FIG. 22, when the friend U1 is riding on the electric bicycle, the portable terminal 8 of the user U0 acquires information indicating that the friend U1 is riding on the electric bicycle via the server 90. Then, the portable terminal 8 of the user U0 is permitted to display the friend position icon 821b of the friend U1 while the user U0 is riding the electric bicycle 10.

After the friend position icon 821b of the friend U1 is displayed, when the information indicating that the friend U1 is riding on the electric bicycle is no longer acquired, the portable terminal 8 of the user U0 is permitted to display the friend position icon 821b of the friend U1 for a predetermined period (here, three hours from 7: 00 am) from a point in time when the information is no longer acquired. Specifically, the portable terminal 8 of the user U0 is permitted to display the friend position icon 821b at a position (also referred to as a final riding position) where riding of the friend U1 is confirmed last. The final riding position is, for example, a position at a point in time when the server 90 and the portable terminal of the friend U1 last communicate with each other, or a position at a point in time when a logout operation is performed on the portable terminal of the friend U1.

As illustrated in (B) of FIG. 22, in a case where the user U0 rides the electric bicycle 10 after a point in time when the riding of the friend U1 is no longer confirmed, during a predetermined period from the point in time when the riding of the friend U1 is no longer confirmed, the portable terminal 8 of the user U0 is permitted to display the friend position icon 821b at the final riding position of the friend U1 while the user U0 is riding on the electric bicycle 10.

For example, a point in time when the portable terminal of the friend U1 and the electric bicycle are last connected (in other words, a point in time when the portable terminal of the friend U1 and the electric bicycle are disconnected) or a point in time when the portable terminal of the friend U1 last confirms that the electric bicycle is started up (in other words, a point in time when the end of the activation is confirmed) is estimated to be a point in time when the riding of the friend U1 is no longer confirmed. The portable terminal 8 of the user U0 acquires information related to the final riding position of the friend U1 from the server 90, and is permitted to display the friend position icon 821b at the position where the friend U1 is last confirmed to have ridden the vehicle for a predetermined period from these time points.

The server 90 may store a point in time when the portable terminal of the friend U1 logs out of the server 90 or an application executed on the server 90, or a point in time when the portable terminal of the friend U1 last transmits predetermined transmission information to the server 90. These time points are estimated as the point in time when the riding of the friend U1 is no longer confirmed. The portable terminal 8 of the user U0 acquires the information related to the final riding position of the friend U1 from the server 90, and is permitted to display the friend position icon 821b at the position where the friend U1 is last confirmed to have ridden the vehicle for a predetermined period from these time points.

As illustrated in (C) of FIG. 22, after a predetermined period has elapsed from the point in time when the riding of the friend U1 is no longer confirmed, the portable terminal 8 of the user U0 is prohibited from displaying the friend position icon 821b of the friend U1 while the user U0 is riding the electric bicycle 10. In other words, the user U0 cannot confirm the position information of the friend U1, but can grasp that the friend U1 is not riding on the electric bicycle.

Referring back to FIG. 12, the traveling screen 820 includes, in the map area 821, information related to a geographical position (hereinafter also referred to as a warning position) to be careful during traveling of the electric bicycle 10. Specifically, the output unit 801d displays a warning position icon 821c at the warning position in the map area 821. The warning position icon 821c can prompt the user U0 riding the electric bicycle 10 to travel safely at the warning position. Accordingly, for example, the user U0 can decelerate the electric bicycle 10.

The information related to the warning position is stored in the storage unit 902 of the server 90. The control unit 801 of the portable terminal 8 communicates with the server 90, refers to the information related to the warning position stored in the storage unit 902, and displays the warning position icon 821c in the map area 821 together with the map information. The control unit 801 of the portable terminal 8 may download the information related to the warning position from the server 90, store the information in the storage unit 802, and display the warning position icon 821c in the map area 821 with reference to the information stored in the storage unit 802.

When both the current position information of the friend and the information related to the warning position are acquired, the warning position icon 821c is preferentially displayed in the map area 821 over the friend position icon 821b.

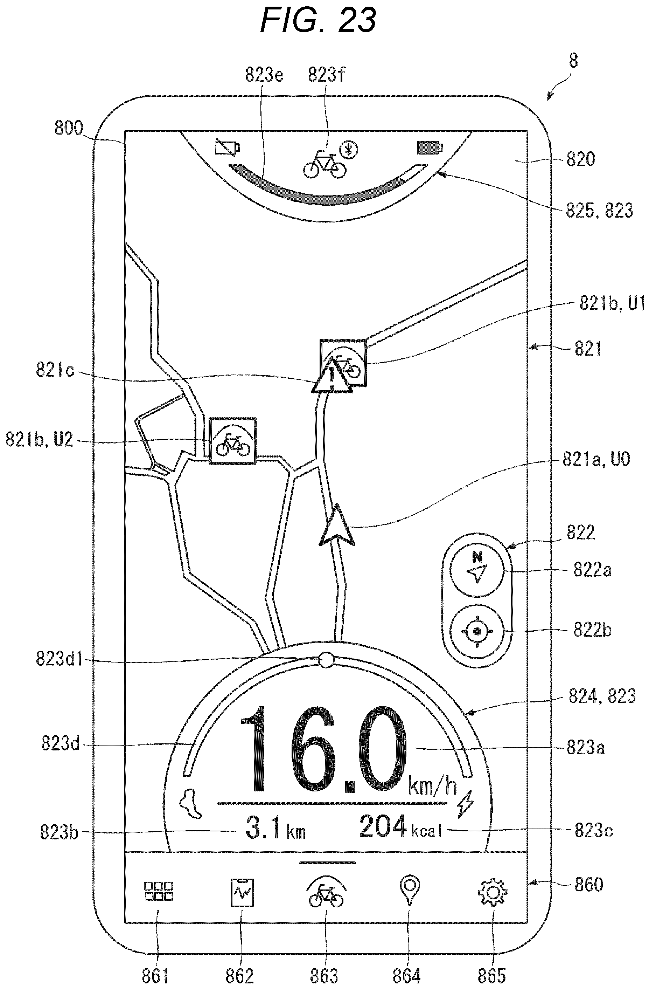

Specifically, as illustrated in FIG. 23, when the friend position icon 821b and the warning position icon 821c are displayed at overlapping positions, the warning position icon 821c is preferentially displayed in the map area 821 so as to be on a near side. As a result, the user U0, who is an occupant of the electric bicycle 10, can reliably recognize the warning position, which is a geographical position to be careful during traveling. The mode of preferentially displaying the warning position icon 821c in the map area 821 is not limited thereto. For example, when the friend position icon 821b and the warning position icon 821c are displayed at overlapping positions, the friend position icon 821b may not be displayed, or the warning position icon 821c may be highlighted.

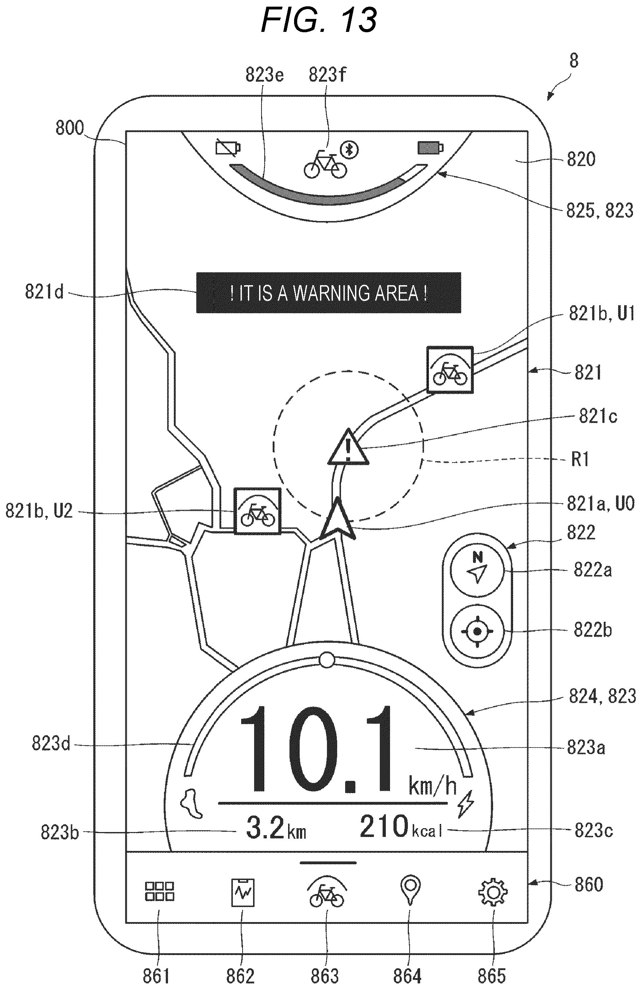

FIG. 13 illustrates a screen displayed when the electric bicycle 10 approaches the warning position. When the current position of the electric bicycle 10 enters a predetermined area R1 including the warning position icon 821c, the output unit 801d displays attention calling information 821d, which is information indicating an approach to the warning position, on the traveling screen 820. The predetermined area R1 is, for example, a circular area (broken line) centered on the warning position icon 821c. The predetermined area R1 may or may not be displayed in the map area 821. As long as the attention calling information 821d can call attention of the user U0, the attention calling information 821d may be based on character information as illustrated in FIG. 13, or may be based on blinking of the warning position icon 821c, voice, vibration, or a combination thereof. For example, the attention calling information 821d may have, as the attention calling information 821d, a configuration of blinking the warning position icon 821c and a configuration of calling attention by voice.

The operation area 822 includes a direction display unit 822a and a current position display unit 822b. The direction display unit 822a indicates a direction of the map information. When the user performs a touch operation (for example, a swipe operation) on the map area 821 and an area where the current position icon 821a is not displayed is displayed in the map area 821, the current position display unit 822b adjusts the display of the map area 821 so that the current position icon 821a comes to a center position of the traveling screen 820.

A vehicle-related state, which is the traveling state of the electric bicycle 10, a motion state of the occupant, a state of components mounted on the electric bicycle 10, and the state of devices mounted on the electric bicycle 10, is displayed in the state display area 823. The acquisition unit 801a of the portable terminal 8 acquires the vehicle-related state by performing BT communication with the control circuit 40 installed in the electric bicycle 10, and the output unit 801d displays the vehicle-related state acquired from the control circuit 40 on the display 800.

Hereinafter, regarding the vehicle-related state, the traveling state of the electric bicycle 10, the motion state of the occupant, the state of the components mounted on the electric bicycle 10, and the state of the devices mounted on the electric bicycle 10 will be described in detail.

The traveling state of the electric bicycle 10 includes, for example, the vehicle speed, the cadence, the traveling distance, and a traveling time. The traveling distance and the traveling time are actual values of one activity, that is, the traveling distance and the traveling time from the start to the end of riding the electric bicycle 10. On the traveling screen 820 illustrated in FIG. 12, a vehicle speed 823a and a traveling distance 823b are displayed as the traveling state of the electric bicycle 10.

The motion state of the occupant includes, for example, a consumed calorie 823c consumed by the occupant during traveling of the electric bicycle 10. The consumed calorie 823c is an actual value of the consumed calorie of one activity. The consumed calorie is calculated by the acquisition unit 801a of the portable terminal 8 based on, for example, the traveling distance and/or the traveling time described above and the weight of the occupant set in the user application in advance.

The state of the component includes, for example, the rotation speed of the motor M, the generated torque of the motor M, and the cadence that is a speed at which the crank pedal 79 rotates. On the traveling screen 820 illustrated in FIG. 12, for example, a meter 823d indicating a ratio of the output of the motor M to the total output of the output by the pedal stepping force and the output of the motor M (hereinafter, also referred to as a motor output ratio) is displayed as the information related to the generated torque of the motor M.

The meter 823d is configured such that a mark 823d1 is movable in a meter area having a semicircular arc shape. When the mark 823d1 is located at a left end portion of the meter area, the motor output ratio is zero. When the mark 823d1 moves rightward in the meter area, the motor output ratio increases, and when the mark 823d1 is located at the center of the meter area as in the state illustrated in FIG. 12, the motor output ratio is 0.5.

The state of the device includes, for example, the state of charge 823e of the battery 2 and a communication state 823f with the BLE unit 44. In the example illustrated in FIG. 12, the state of charge 823e of the battery 2 is displayed by a meter having an arc shape. Further, the communication state 823f with the BLE unit 44 is configured such that the user can grasp the communication state between the portable terminal 8 and the control circuit 40 by changing the color of the icon or changing the density according to a BT connection state, the BT unconnected state, and a communication error state.

The state display area 823 includes a lower area 824 in which predetermined information is displayed and an upper area 825 in which information different from the information displayed in the lower area 824 is displayed. The lower area 824 and the upper area 825 are arranged on opposite sides of the map area 821. In the present embodiment, the meter 823d indicating the vehicle speed 823a of the electric bicycle 10, the traveling distance 823b, the consumed calorie 823c, and the motor output ratio is displayed in the lower area 824, and the state of charge 823e of the battery 2 and the communication state 823f with the BLE unit 44 are displayed in the upper area 825.

In this way, by changing the display area according to the type of information, it is possible to shorten a time for the occupant to grasp a display content displayed on the traveling screen 820. Further, by displaying the map area 821 between the lower area 824 and the upper area 825, it is possible to prevent the occupant from erroneously reading a plurality of information displayed in the state display area 823.

Among the vehicle-related state displayed in the state display area 823 of the traveling screen 820, the vehicle speed 823a is information most frequently confirmed by the occupant, and is displayed largest.

FIG. 14 illustrates an example of the traveling screen 820A that is the sport design different from the traveling screen 820 that is the standard design illustrated in FIGS. 12 and 13. The output unit 801d displays the traveling screen 820A on the display 800 when the electric bicycle 10 is set to the sport mode described above and the traveling screen tab 863 of the tab switching area 860 is selected. Hereinafter, when the traveling screen 820A is described, the same components as those of the traveling screen 820 are denoted by the same reference numerals, and repeated description thereof will be omitted.

The traveling screen 820A includes a map area 821A, an operation area 822A, and a state display area 823A.

Similarly to the map area 821 of FIG. 12, the map area 821A includes the current position icon 821a, the friend position icon 821b, and the warning position icon 821c.

Unlike the map area 821 entirely displayed on the traveling screen 820, the map area 821A is displayed only in the upper half of the traveling screen 820A.

Similarly to the state display area 823 of FIG. 12, the state display area 823A includes a lower area 824A and an upper area 825A. The lower area 824A and the upper area 825A are arranged on opposite sides of the map area 821A.

Similarly to the state display area 823 of FIG. 12, the state of charge 823e of the battery 2 and the communication state 823f with the BLE unit 44 are displayed in the upper area 825A. On the other hand, in the lower area 824A, five kinds of information among the information on the vehicle-related state are displayed. In the example illustrated in FIG. 14, the vehicle speed 823a, the traveling distance 823b, the consumed calorie 823c, a traveling time 823h, and a cadence 823g are displayed.

As can be seen from the comparison between FIGS. 12 and 14, the size of the state display area 823A with respect to the map area 821A in the sport mode (sport design) is larger than the size of the state display area 823 with respect to the map area 821 in the standard mode (standard design). Therefore, in the sport mode in which the motion performance is increased and the necessity for the occupant to confirm the vehicle-related state is increased, the size of the state display area 823A is increased, so that the electric bicycle 10 can travel more safely.

The number of information on the vehicle-related state displayed in the state display area 823A in the sport mode (that is, seven kinds of information on the vehicle speed, the traveling distance, the traveling time, the consumed calorie, the cadence, the state of charge of the battery, and the communication state) is larger than the number of information on the vehicle-related state displayed in the state display area 823 in the standard mode (that is, six kinds of information on the vehicle speed, the traveling distance, the consumed calorie, the motor output ratio, the state of charge of the battery, and the communication state). Therefore, in the sport mode in which the motion performance increases and the necessity for the occupant to confirm the vehicle-related state increases, more information is displayed in the state display area 823A, so that the electric bicycle 10 can travel more safely.

When the sport mode is selected, an update frequency of the numerical value displayed in the state display area 823A may be increased. That is, a frequency of communication between the portable terminal 8 and the control circuit 40 may be increased.

Similarly to the operation area 822 of FIG. 12, the operation area 822A includes the direction display unit 822a and the current position display unit 822b. The operation area 822A further includes an activity stop button 822c. In the present embodiment, the activity stop button 822c is displayed on the traveling screen 820A in the sport mode, and is not displayed on the traveling screen 820 in the standard mode.

The activity stop button 822c receives an input by a touch operation of the user. When the activity stop button 822c receives the touch input, the control unit 801 temporarily stops the storage of the vehicle-related state in the activity currently being executed. In other words, while the activity is stopped, the control unit 801 does not store the vehicle-related state as the traveling log. When the storage of the vehicle-related state is temporarily stopped, the traveling state of the electric bicycle 10 and the motion state of the occupant displayed on the traveling screen 820A are not updated.

Then, when there is an input to the activity stop button 822c again, the control unit 801 resumes the storage of the vehicle-related state.

When there is a touch input to the activity stop button 822c, the control unit 801 may stop the storage instead of temporarily stopping the storage of the vehicle-related state in the activity.

Below the state display area 823A, a power slide bar 826 that allows the occupant to manually change the power level is displayed. The power slide bar 826 is information that is displayed on the traveling screen 820A in the sport mode, and is not displayed on the traveling screen 820 in the standard mode.

(Map Screen)

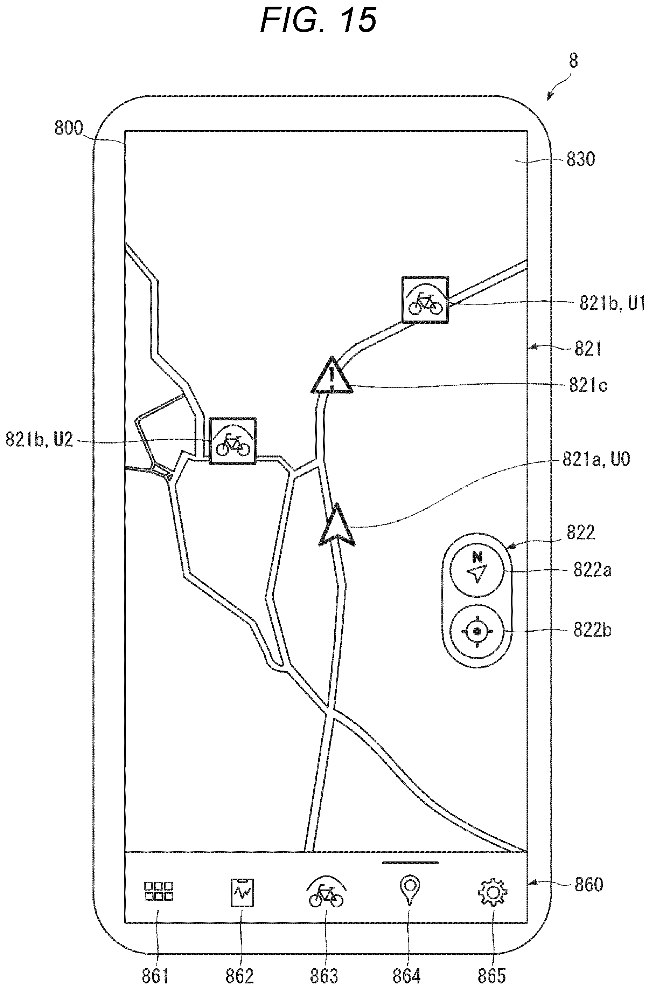

FIG. 15 illustrates an example of the map screen 830. When the map screen tab 864 of the tab switching area 860 is selected, the output unit 801d outputs the map screen 830 on the display 800.

Similarly to the traveling screen 820 of FIG. 12, the map screen 830 includes the map area 821 in which map information is displayed and the operation area 822 in which the predetermined operation can be performed on the traveling screen 820.

Since the map screen 830 does not have the state display area 823, the map area 821 of the map screen 830 is displayed larger on the display 800 than the map area 821 of the traveling screen 820, and a ratio of the map area 821 to the display 800 is large. Like the traveling screens 820, 820A, the map screen 830 is used while riding the electric bicycle 10.

(Traveling Log Screen)

FIG. 16 illustrates an example of the traveling log screen 840. When the traveling log tab 862 of the tab switching area 860 is selected, the output unit 801d outputs the traveling log screen 840 on the display 800. The traveling log screen 840 includes a calendar display area 841 and a traveling information display area 842.

In a calendar displayed in the calendar display area 841, a riding mark is attached to the day of riding the electric bicycle 10, and the user can visually confirm the day of riding the electric bicycle 10.

In the traveling information display area 842, an area 842a in which a monthly traveling time, a monthly traveling distance, and monthly consumed calories traveled by the electric bicycle 10 are displayed in numbers, and an area 842b in which a daily traveling distance in one month is displayed in a bar graph are displayed.

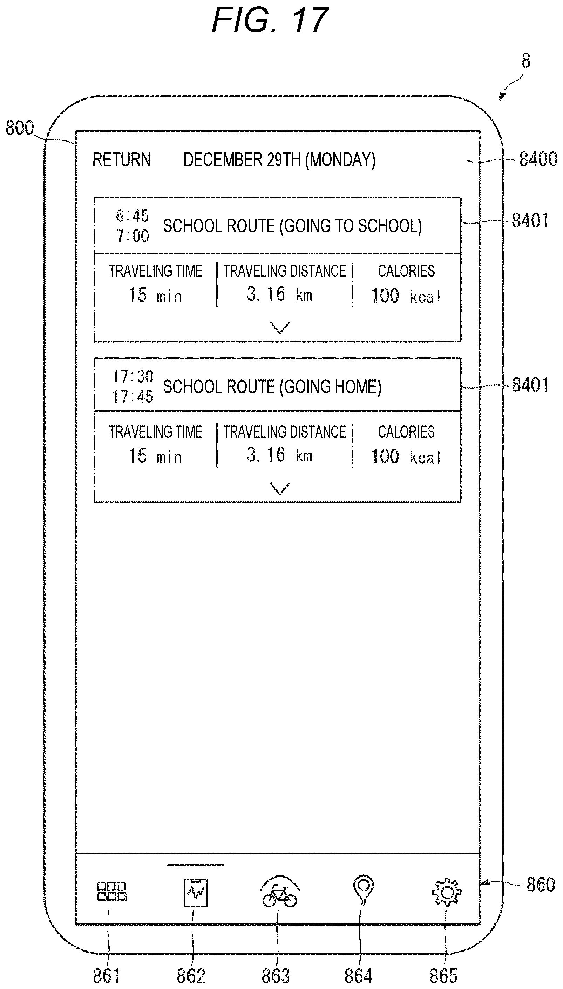

FIG. 17 is a screen displayed when the riding mark displayed in the calendar display area 841 is touched, and is a screen 8400 on which information 8401 on all activities on the day of riding the electric bicycle 10 is displayed. One activity means from the start to the end of riding the electric bicycle 10. The information 8401 on each activity displays a riding start time point, a riding end time point, the traveling time, the traveling distance, and the consumed calorie.

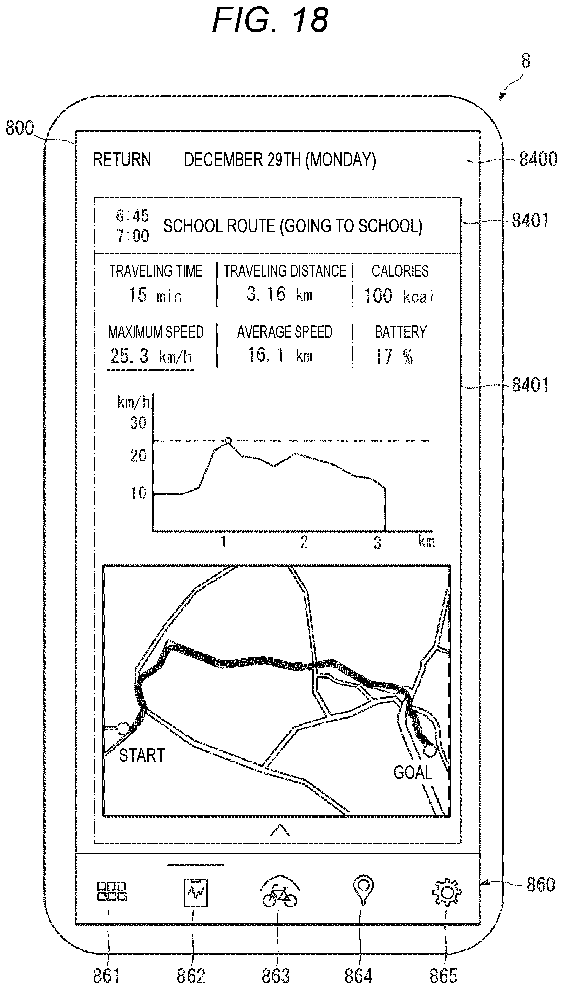

FIG. 18 is a detail screen displayed when the information 8401 on each activity in FIG. 17 is touched. As illustrated in FIG. 18, the information 8401 on each activity further has the maximum speed during traveling, the average speed, and the electric power of the battery 2 consumed in the activity.

Further, the information 8401 on each activity displays a speed history graph in which a horizontal axis represents the traveling distance and a vertical axis represents the speed. Accordingly, the user can confirm the speed history in the activity.

The information 8401 on each activity further has the map information in which a traveling trajectory is described.

(Assist Setting Screen)

FIG. 19 illustrates an example of the assist setting screen 850. When the assist setting tab 865 of the tab switching area 860 is selected, the output unit 801d outputs the assist setting screen 850 on the display 800.

The assist setting screen 850 includes the assist power switch 851 that switches the assist power supply on and off, a sudden start prevention switch 852 that switches a sudden start prevention control on and off, an automatic mode switch 853 that switches an automatic switching mode of the assist control on and off, a power slide bar 854 that allows the power level of the assist control to be manually changed, and a response slide bar 855 that allows the response level of the assist control to be manually changed. The switches 851, 852, and 853, and the slide bars 854, 855 are operated by the user's touch. Note that the assist setting screen 850 does not need to include all of these switches and slide bars, and may be configured not to include any of them. For example, in the case of a configuration in which the sudden start prevention control is always on, the sudden start prevention switch 852 may not be provided.

When the assist power switch 851 is turned on, the control unit 801 of the portable terminal 8 transmits permission for the assist control to the assist control unit 40c of the electric bicycle 10, that is, permits the motor M to generate power.

On the other hand, when the assist power switch 851 is turned off, the control unit 801 of the portable terminal 8 transmits prohibition of the assist control to the assist control unit 40c of the electric bicycle 10, that is, prohibits the motor M from generating power.

The sudden start prevention switch 852 is configured to be operable when the assist power switch 851 is on. The sudden start prevention control is a control that prohibits the motor M from generating the torque when the cadence and the acceleration are respectively less than predetermined thresholds when the electric bicycle 10 is started. When the sudden start prevention switch 852 is turned on, the control unit 801 of the portable terminal 8 transmits permission for the sudden start prevention control to the assist control unit 40c of the electric bicycle 10. On the other hand, when the sudden start prevention control to the assist control unit 40c of the electric bicycle 10. On the other hand, when the sudden start prevention switch 852 is turned off, the control unit 801 of the portable terminal 8 transmits prohibition of the sudden start prevention control to the assist control unit 40c of the electric bicycle 10.

The automatic mode switch 853 is configured to be operable when the assist power switch 851 is on. The automatic switching mode of the assist control is a mode in which the power level and the response level are automatically switched according to the traveling situation of the electric bicycle 10. For example, the assist control unit 40c automatically increases the power level and the response level when large power is required such as during uphill traveling, and the assist control unit 40c automatically decreases the power level and the response level when it is necessary to travel at a low speed on a narrow road, a rough road, or the like. When the automatic mode switch 853 is turned on, the control unit 801 of the portable terminal 8 transmits permission for the automatic switching mode to the assist control unit 40c of the electric bicycle 10. On the other hand, when the automatic mode switch 853 is turned off, the control unit 801 of the portable terminal 8 transmits prohibition of the automatic switching mode to the assist control unit 40c of the electric bicycle 10.

The power slide bar 854 and the response slide bar 855 are configured to be operable when the assist power switch 851 is on and the automatic mode switch 853 is off. The power slide bar 854 and the response slide bar 855 can be switched from level 1 to level 4 by the touch operation of the user. When the levels of the power slide bar 854 and the response slide bar 855 are changed, the control unit 801 of the portable terminal 8 transmits the changed power level and/or response level to the assist control unit 40c of the electric bicycle 10, and the assist control unit 40c causes the motor M to generate power based on these levels.

[Information Providing Method]

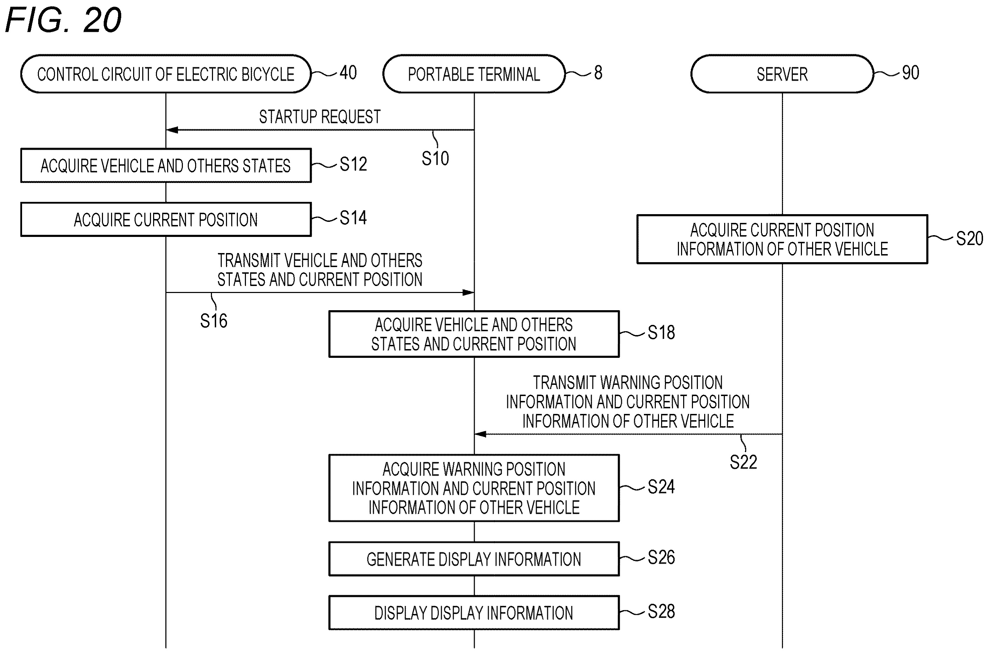

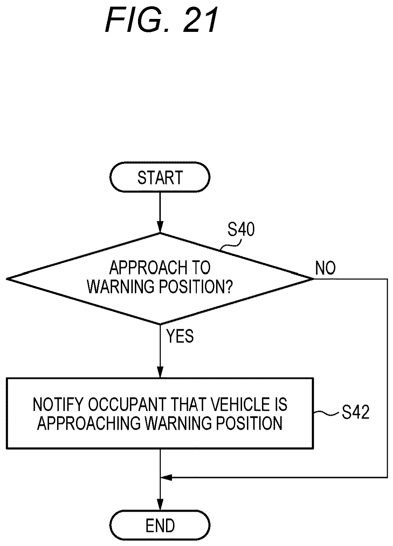

Next, an embodiment of the information providing method according to the present invention will be described with reference to FIGS. 20 and 21.

When riding the electric bicycle 10, the user U0 brings the portable terminal 8 close to the near field communication (NFC) tag attached to the electric bicycle 10, and activates the user application. After the activation of the user application and the user logs in to the server 90, an activation request is transmitted from the portable terminal 8 to the control circuit 40 (step S10). After the control circuit 40 is activated, the user U0 gets on the electric bicycle 10 and starts traveling.

The control circuit 40 of the electric bicycle 10 acquires the vehicle-related state described above while the electric bicycle 10 is traveling (step S12).

The control circuit 40 acquires the current position information of the electric bicycle 10 from the GNSS unit 43 (step S14). The vehicle-related state and the current position information may be acquired simultaneously.

Next, the control circuit 40 transmits the vehicle-related state and the current position information to the portable terminal 8 (step S16), and the acquisition unit 801a of the portable terminal 8 acquires them (step S18).

On the other hand, the server 90 acquires current position information of a vehicle (for example, the electric bicycle) of another user (the friend U1 described above) different from the user U0 of the electric bicycle 10 (step S20).

When first information that is information indicating that the friend U1 permits the display of information based on the current position information of his/her own vehicle on the display 800 of the portable terminal 8 of the user U0 is acquired, the server 90 permits the information (specifically, the friend position icon 821b) indicating the current position information of the vehicle of the friend U1 to be displayed on the display 800. Specifically, the first information is information indicating that the position information sharing switch is turned on.

When second information indicating that the vehicle of the friend U1 is in use or the friend U1 is riding his/her own vehicle is acquired, the server 90 permits the information indicating the current position information of the vehicle of the friend U1 to be displayed on the display 800 of the portable terminal 8 of the user U0.

In the present embodiment, when the first information is acquired and the second information is acquired, the server 90 permits the information indicating the current position information of the vehicle of the friend U1 to be displayed on the display 800 of the portable terminal 8 of the user U0. Then, the server 90 transmits the current position information of the vehicle of the friend U1 to the portable terminal 8 of the user U0 of the electric bicycle 10 (step S22).

On the other hand, when the first information is not acquired, the server 90 prohibits the information indicating the current position information of the friend U1 from being displayed on the display 800 of the portable terminal 8 of the user U0. That is, when the friend U1 does not intend to share the current position information with the user U0, the current position information of the friend U1 is not displayed on the display 800 of the portable terminal 8 of the user U0.

When the second information is not acquired, the server 90 prohibits the information indicating the current position information of the friend U1 from being displayed on the display 800 of the portable terminal 8 of the user U0. That is, the current position information of the friend U1 is not always shared by the user U0 using the GPS sensor or the like of the portable terminal of the friend U1. Accordingly, the privacy of the friend U1 is protected.

Therefore, when the first information or the second information is not acquired, the server 90 does not transmit the current position information of the vehicle of the friend U1 to the portable terminal 8 of the user U0 in step S22.

The server 90 also transmits information related to the warning position stored in advance to the portable terminal 8.

The acquisition unit 801a of the portable terminal 8 acquires the current position information of the vehicle of the other user and the information related to the warning position transmitted from the server 90 (step S24).

The generation unit 801c of the portable terminal 8 generates display information for displaying the information acquired in step S18 and step S24 on the display 800 (step S26).

Specifically, in step S26 of generating the display information, the display information having the map area 821 for displaying the map information including the information (the friend position icon 821b described above) indicating the current geographical position of the vehicle (the another vehicle) of the friend U1 is generated.

In step S26 of generating the display information, the display information having the map area 821 for displaying the map information including the information (the current position icon 821a described above) indicating the current geographical position of the electric bicycle 10 (host vehicle) is further generated.

In step S26 of generating the display information, the display information having the map area 821 for displaying the map information including the information (the warning position icon 821c described above) indicating the warning position, which is the geographical position to be careful during traveling of the electric bicycle 10 (the host vehicle), is further generated. In step S26 of generating the display information, instead of or in addition to generating the display information having the map area 821 for displaying the map information including the information indicating the warning position, the display information having the map area 821 for displaying the information indicating that the vehicle has approached the warning position (the attention calling information 821d described above) may be generated.

Then, the output unit 801d of the portable terminal 8 displays the display information generated in step S26 on the display 800 (step S28).

Here, regarding the second information described above, "the vehicle of the friend U1 is in use" and "the friend U1 is riding his/her own vehicle" are determined based on, for example, a fact that the portable terminal used by the friend U1 is connected to the vehicle. For example, when the portable terminal of the friend U1 and the vehicle are connected to each other (that is, when BT communication is being performed), the server 90 acquires the information indicating that the vehicle of the friend U1 is in use or the information indicating that the friend U1 is riding his/her own vehicle.

"The vehicle of the friend U1 is in use" and "the friend U1 is riding his/her own vehicle" may be determined based on a fact that the portable terminal of the friend U1 confirms that the vehicle is started up. For example, when the portable terminal of the friend U1 receives information indicating the startup of his/her own vehicle via the user application or when the portable terminal of the friend U1 estimates the startup of his/her own vehicle via the user application, the server 90 acquires the information indicating that the vehicle of the friend U1 is in use or the information indicating that the friend U1 is riding his/her own vehicle.

"The vehicle of the friend U1 is in use" and "the friend U1 is riding his/her own vehicle" may be determined based on a fact that the portable terminal of the friend U1 is logged in to the server 90 or the application executed on the server 90. For example, when the portable terminal of the friend U1 is logged in to the server 90 or the application executed on the server 90, the server 90 acquires the information indicating that the vehicle of the friend U1 is in use or the information indicating that the friend U1 is riding his/her own vehicle.

"The vehicle of the friend U1 is in use" and "the friend U1 is riding his/her own vehicle" may be determined based on a fact that the portable terminal of the friend U1 is transmitting predetermined transmission information to the server 90. The predetermined transmission information includes, for example, information related to the current geographical position of the vehicle acquired by the GNSS unit of the vehicle of the friend U1, information related to the current geographical position of the portable terminal acquired by the GPS sensor of the portable terminal of the friend U1, and the like. For example, when the portable terminal of the friend U1 is transmitting the predetermined transmission information to the server 90, the server 90 acquires the information indicating that the vehicle of the friend U1 is in use or the information indicating that the friend U1 is riding his/her own vehicle.

Next, a control flow when the electric bicycle 10 approaches the warning position icon 821c in a state in which the warning position icon 821c is displayed on the portable terminal 8 will be described with reference to FIG. 21.

The control unit 801 of the portable terminal 8 determines whether the current position of the electric bicycle 10 is approaching the warning position, which is the geographical position to be careful during vehicle-travel (step S40). Specifically, it is determined whether the current position icon 821a of the electric bicycle 10 is located within the predetermined area R1 from the warning position icon 821c.

When the control unit 801 determines that the current position of the electric bicycle 10 is approaching the warning position (step S40: YES), the output unit 801d notifies the occupant (the user U0) by displaying the attention calling information 821d on the traveling screen 820 (step S42). On the other hand, when it is not determined that the current position of the electric bicycle 10 is approaching the warning position (step S40: NO), the control unit 801 ends the present control flow.

A subject that performs each step illustrated in FIGS. 20 and 21 of the information providing method according to the present invention can be freely changed. For example, in the example illustrated in FIG. 20, step S26 of generating the display information is executed by the portable terminal 8, but is not limited thereto, and may be executed by the server 90. That is, the generation unit 801c may be included in the server 90. Specifically, the portable terminal 8 may transmit the information on the vehicle-related state and the current geographical position of the electric bicycle 10 acquired by the portable terminal 8 to the server 90 once, and the server 90 may generate the display information having the map area 821 for displaying the map information including the information indicating the current geographical positions of the electric bicycle 10 and the friend U1 and the information indicating the warning position.

The information providing method described in the above embodiment can be implemented by, for example, causing a computer (that is, the control unit 801 of the portable terminal 8, the control unit 901 of the server 90, and/or the control circuit 40 of the electric bicycle 10) to execute a prepared information providing program. For example, the information providing program is stored in a computer-readable storage medium and executed by being read from the storage medium. In addition, the information providing program may be provided in a form stored in a non-transitory storage medium such as a flash memory, or may be provided via a network such as the Internet.

Although an embodiment of the present disclosure has been described above with reference to the accompanying drawings, it is needless to say that the present invention is not limited to the embodiment. It is apparent to those skilled in the art that various changes or modifications can be conceived within the scope described in the claims, and it is understood that the changes or modifications naturally fall within the technical scope of the present invention. In addition, the constituent elements in the above embodiment may be freely combined without departing from the gist of the invention.

In the embodiment described above, the electric bicycle 10 is exemplified as the vehicle, and the information providing method of providing information to the occupant of the electric bicycle 10 has been described, but the present invention is not limited thereto. For example, the vehicle to which the information providing method is applied may be an electric motorcycle without a pedal input by the occupant. The number of wheels of the vehicle is not limited, and the vehicle may be, for example, an electric three-wheeled vehicle or four-wheeled vehicle. Furthermore, in a case where the information provided to the occupant does not have electric-power-related information, the vehicle may be a non-electric vehicle (a human-powered vehicle, an engine-powered vehicle, or the like) other than the electric vehicle (the electric bicycle, the electric two-wheeled vehicle, the electric three-wheeled vehicle, and the electric four-wheeled vehicle described above).

In the embodiment described above, the acquisition unit 801a of the portable terminal 8 acquires all of the state of the vehicle, the state of the occupant, the state of the components mounted on the vehicle, and the state of the devices mounted on the vehicle as the vehicle-related state, but is not limited thereto, and may acquire at least one of these.

In the present specification, at least the following matters are described. In the parentheses, the corresponding constituent elements and the like in the above embodiment are illustrated as an example, but the present invention is not limited thereto.

(1) An information providing method of providing information to an occupant of a vehicle (the electric bicycle 10), the information providing method including:

a step (steps S20, S24) of acquiring another vehicle position information that is information related to a current geographical position of another vehicle different from the vehicle;
a step (step S26) of generating display information having a display area (the map areas 821, 821A) for displaying map information, which includes information (the friend position icon 821b) indicating the current geographical position of the another vehicle, based on the another vehicle position information, the display information being information to be displayed on a display unit (the display 800 of the portable terminal 8) disposed at a position visually recognizable by the occupant; and
a step (step S28) of displaying the display information on the display unit.
According to (1), since the information indicating the current geographical positions of the another vehicle is displayed in the display area for displaying the map information, useful information can be displayed on the display unit, and convenience of the occupant can be improved.

(2) The information providing method according to (1), further including:

a step (steps S14, S18) of acquiring host vehicle position information that is information related to a current geographical position of the vehicle, and
in the step of generating the display information, the display information having the display area for displaying the map information further including information (the current position icon 821a) indicating the current geographical position of the vehicle is generated based on the host vehicle position information.

According to (2), the occupant can confirm the host vehicle position information.

(3) The information providing method according to (1) or (2), wherein
the display information

is permitted to be displayed on the display unit when first information (the position information sharing switch in the area 8113 is turned on) is acquired, the first information being information indicating that another occupant who is an occupant of the another vehicle permits the vehicle, the display unit, or the occupant to display information based on the another vehicle position information on the display unit, or
is prohibited from being displayed on the display unit when the first information is not acquired.

According to (3), it is possible to determine whether the information based on the another vehicle position information is displayed to the occupant according to the intention of the another occupant.

(4) The information providing method according to any one of (1) to (3), wherein
the display information

is permitted to be displayed on the display unit when second information is acquired, the second information being information indicating that the another vehicle is in use or information indicating that another occupant who is an occupant of the another vehicle is riding the another vehicle, or
is prohibited from being displayed on the display unit when the second information is not acquired.

According to (4), it is possible to display the information based on the another vehicle position information to the occupant only when the another vehicle is in use or when the another occupant is riding the his/her own vehicle.

(5) The information providing method according to (4), wherein
when the second information is no longer acquired after the display information is displayed on the display unit, the display information is permitted to be displayed on the display unit for a predetermined period from a point in time when the second information is no longer acquired.

According to (5), it is possible to display the information based on the another vehicle position information to the occupant for the predetermined period from the point in time when the use or riding of the another vehicle ends.

(6) The information providing method according to (5), wherein
when the second information is no longer acquired after the display information is displayed on the display unit, the display information is permitted to be displayed on the display unit for the predetermined period from the point in time when the second information is no longer acquired, in which the display information is information indicating the current geographical position of the another vehicle at the point in time.

According to (6), it is possible to display the information indicating the current geographical position of the another vehicle to the occupant for the predetermined period from the point in time when the use or riding of the another vehicle ends.

(7) The information providing method according to any one of (4) to (6), wherein

the another vehicle is configured to be connected to another terminal used by the another occupant, and
the second information indicates that the another vehicle is in use or the another occupant is riding the another vehicle, when the another terminal and the another vehicle are connected or when the another terminal confirms that the another vehicle is started up.

According to (7), the second information can be acquired based on communication between the another terminal used by the another occupant and the another vehicle.

(8) The information providing method according to any one of (4) to (6), wherein

another terminal used by the another occupant is configured to

log in to a remote device (the server 90) connected to the another terminal via a network, or an application executed on a remote device connected to the another terminal via a network, or
transmit transmission information to a remote device connected to the another terminal via a network, and

the second information indicates that the another vehicle is in use or the another occupant is riding the another vehicle, when the another terminal is logged in to the remote device or the application or when the another terminal is transmitting the transmission information to the remote device.

According to (8), the second information can be acquired based on communication between the another terminal used by the another occupant and the remote device.

(9) The information providing method according to (4), wherein

the another vehicle is configured to be connected to another terminal used by the another occupant, and the display information is permitted to be displayed on the display unit for a predetermined period from another point in time when the another terminal and the another vehicle are last connected, or from another point in time when the another terminal last confirms that the another vehicle is started up.

According to (9), when the another occupant ends riding his/her own vehicle, the information indicating the current geographical position of the another vehicle can be displayed to the occupant for the predetermined period from the point in time when the riding ends.

(10) The information providing method according to (4), wherein

another terminal used by the another occupant is configured to

log in to a remote device connected to the another terminal via a network, or an application executed on a remote device connected to the another terminal via a network, or transmit transmission information to a remote device connected to the another terminal via a network, and

the display information is permitted to be displayed on the display unit for a predetermined period from further another point in time when the another terminal logs out from the remote device or the application, or from further another point in time when the another terminal last transmits the transmission information to the remote device.

According to (10), when the another occupant ends riding his/her own vehicle, the information indicating the current geographical position of the another vehicle can be displayed to the occupant for the predetermined period from the point in time when the riding ends.

(11) The information providing method according to (4) dependent on (3), wherein
the display information is permitted to be displayed on the display unit when the first information is acquired and the second information is acquired.

According to (11), in a case where the information based on the another vehicle position information is permitted to be displayed to the occupant by the intention of the another occupant, when the second information is acquired, the information based on the another vehicle position information can be displayed to the occupant.

(12) The information providing method according to any one of (1) to (11), further including:

a step (steps S14, S18) of acquiring host vehicle position information that is information related to a current geographical position of the vehicle, wherein
in the step of generating the display information, the display information having the display area for displaying the map information of a predetermined geographical range including the current geographical position of the vehicle is generated based on the host vehicle position information.

According to (12), the occupant can easily confirm the map information around the current geographical position of the occupant.

(13) The information providing method according to (12), wherein
in the step of generating the display information, the display information having the display area for displaying the map information including information indicating the current geographical position of the another vehicle included in the predetermined geographical range, among the current geographical position of the another vehicle, is generated based on the another vehicle position information.

According to (13), the occupant can easily confirm the another vehicle present around the current geographical position of the occupant.

(14) The information providing method according to any one of (1) to (13), further including:

a step (step S24) of acquiring traveling caution position information that is information related to a geographical position to be careful during vehicle-travel, wherein

in the step of generating the display information, based on the traveling caution position information,

the display information having the display area for displaying the map information further including information (warning position icon 821c) indicating the geographical position to be careful during vehicle-travel is generated, and/or

the display information having the display area for further displaying information (the attention calling information 821d) indicating an approach to the geographical position to be careful during vehicle-travel is generated.

According to (14), it is possible to notify the occupant of the geographical position to be careful during vehicle-travel.

(15) The information providing method according to (14), further including:

a step (step S18) of acquiring host vehicle position information that is information related to a current geographical position of the vehicle; and

a step (step S40) of determining that the current geographical position of the vehicle has approached the geographical position to be careful during vehicle-travel.

According to (15), it is possible to call the attention of the occupant when the vehicle travels at the geographical position to be careful during vehicle-travel.

(16) The information providing method according to (15), further including:
a step (step S42) of notifying the display unit, a terminal (the portable terminal 8) fixed to the vehicle, or a terminal (the portable terminal 8) used by the occupant, when it is determined that the current geographical position of the vehicle has approached the geographical position to be careful during vehicle-travel.

According to (16), it is possible to call the attention of the occupant via the display unit or the terminal when the vehicle travels at the geographical position to be careful during vehicle-travel.

(17) The information providing method according to any one of (14) to (16), wherein
in the step of generating the display information, the display information having the display area is generated such that, when both the another vehicle position information and the traveling caution position information are acquired, information indicating the geographical position to be careful during vehicle-travel is preferentially displayed on the map information over information indicating the current geographical position of the another vehicle.

According to (17), it is possible to cause the occupant to more reliably recognize the geographical position to be careful during vehicle-travel.

(18) The information providing method according to any one of (1) to (17), wherein
the vehicle includes an input unit (the crank pedal 79) that receives an input from a leg of the occupant, and a wheel (the rear wheel 78) to which power input to the input unit is transmitted.

According to (18), it is possible to improve the convenience for the occupant of the vehicle that can travel by the input from the leg.

(19) The information providing method according to any one of (1) to (18), wherein
the another vehicle includes an input unit (the crank pedal 79) that receives an input from a leg of another occupant who is an occupant of the another vehicle, and a wheel (the rear wheel 78) to which power input to the input unit is transmitted.

According to (19), it is possible to improve the convenience of the occupant by causing the display unit to display useful information on the another vehicle that can travel by the input from the leg.

(20) The information providing method according to (18) or (19), wherein
the vehicle further includes an electric motor (the motor M) that transmits the output power to the wheel or another wheel (the front wheel 73) different from the wheel.

According to (20), it is possible to improve the convenience for the occupant of the vehicle having the electric motor.

(21) An information providing program of providing information to an occupant of a vehicle, the information providing program causing a computer (the control unit 801 of the portable terminal 8, the control circuit 40 of the electric bicycle 10, and/or the control unit 901 of the server 90) to perform:

a step (steps S20, S24) of acquiring another vehicle position information that is information related to a current geographical position of another vehicle different from the vehicle;

a step (step S26) of generating display information having a display area (the map areas 821, 821A) for displaying map information, which includes information (the friend position icon 821b) indicating the current geographical position of the another vehicle, based on the another vehicle position information, the display information being information to be displayed on a display unit disposed at a position visually recognizable by the occupant; and

a step (step S28) of displaying the display information on the display unit.

According to (21), since the information indicating the current geographical positions of the another vehicle is displayed in the display area for displaying the map information, useful information can be displayed on the display unit, and convenience of the occupant can be improved.

(22) A computer-readable storage medium storing the information providing program according to (21).

According to (22), the information providing program described above can be executed by the computer.

(23) An information processing device (the control unit 801 of the portable terminal 8, the control circuit 40 of the electric bicycle 10, and/or the control unit 901 of the server 90) that provides information to an occupant of a vehicle, the information processing device including:

a position information acquisition unit (the acquisition unit 801a) that acquires another vehicle position information that is information related to a current geographical position of another vehicle different from the vehicle;

a generation unit (the generation unit 801c) that generates display information having a display area (the map area 821, 821A) for displaying map information, which includes information indicating the current geographical position of the another vehicle, based on the another vehicle position information acquired by the position information acquisition unit, the display information being information to be displayed on a display unit disposed at a position visually recognizable by the occupant; and

an output unit (the output unit 801d) that outputs the display information generated by the generation unit to the display unit.

According to (23), since the information indicating the current geographical positions of the another vehicle is displayed in the display area for displaying the map information, useful information can be displayed on the display unit, and convenience of the occupant can be improved.

The present application is based on a Japan Patent Application (Patent Application No. 2023-052479) filed on March 28, 2023, and the contents thereof are incorporated herein by reference.

REFERENCE SIGNS LIST

10 electric bicycle (vehicle)
40 control circuit (information processing device)
8 portable terminal (information processing device)
801a acquisition unit (position information acquisition unit)
801c generation unit
801d output unit
821a current position icon (host vehicle position information)
821b friend position icon (another vehicle position information)
821c warning position icon (traveling caution position information)
821d attention calling information
90 server (information processing device)

**Claims**

1. An information providing method of providing information to an occupant of a vehicle, the information providing method comprising:

a step of acquiring another vehicle position information that is information related to a current geographical position of another vehicle different from the vehicle;

a step of generating display information having a display area for displaying map information, which includes information indicating the current geographical position of the another vehicle, based on the another vehicle position information, the display information being information to be displayed on a display unit disposed at a position visually recognizable by the occupant; and

a step of displaying the display information on the display unit.

2. The information providing method according to claim 1, further comprising:

a step of acquiring host vehicle position information that is information related to a current geographical position of the vehicle, and

in the step of generating the display information, the display information having the display area for displaying the map information further including information indicating the current geographical position of the vehicle is generated based on the host vehicle position information.

3. The information providing method according to claim 1 or 2, wherein the display information

   is permitted to be displayed on the display unit when first information is acquired, the first information being information indicating that another occupant who is an occupant of the another vehicle permits the vehicle, the display unit, or the occupant to display information based on the another vehicle position information on the display unit, or

   is prohibited from being displayed on the display unit when the first information is not acquired.

4. The information providing method according to any one of claims 1 to 3, wherein the display information

   is permitted to be displayed on the display unit when second information is acquired, the second information being information indicating that the another vehicle is in use or information indicating that another occupant who is an occupant of the another vehicle is riding the another vehicle, or

   is prohibited from being displayed on the display unit when the second information is not acquired.

5. The information providing method according to claim 4, wherein when the second information is no longer acquired after the display information is displayed on the display unit, the display information is permitted to be displayed on the display unit for a predetermined period from a point in time when the second information is no longer acquired.

6. The information providing method according to claim 5, wherein when the second information is no longer acquired after the display information is displayed on the display unit, the display information is permitted to be displayed on the display unit for the predetermined period from the point in time when the second information is no longer acquired, wherein the display information is information indicating the current geographical position of the another vehicle at the point in time.

7. The information providing method according to any one of claims 4 to 6, wherein

   the another vehicle is configured to be connected to another terminal used by the another occupant, and the second information indicates that the another vehicle is in use or the another occupant is riding the another vehicle, when the another terminal and the another vehicle are connected or when the another terminal confirms that the another vehicle is started up.

8. The information providing method according to any one of claims 4 to 6, wherein

   another terminal used by the another occupant is configured to

   log in to a remote device connected to the another terminal via a network, or an application executed on a remote device connected to the another terminal via a network, or

   transmit transmission information to a remote device connected to the another terminal via a network, and

   the second information indicates that the another vehicle is in use or the another occupant is riding the another vehicle, when the another terminal is logged in to the remote device or the application or when the another terminal is transmitting the transmission information to the remote device.

9. The information providing method according to claim 4, wherein

   the another vehicle is configured to be connected to another terminal used by the another occupant, and the display information is permitted to be displayed on the display unit for a predetermined period from another point in time when the another terminal and the another vehicle are last connected, or from another point in time when the another terminal last confirms that the another vehicle is started up.

10. The information providing method according to claim 4, wherein

another terminal used by the another occupant is configured to

log in to a remote device connected to the another terminal via a network, or an application executed on a remote device connected to the another terminal via a network, or
transmit transmission information to a remote device connected to the another terminal via a network, and

the display information is permitted to be displayed on the display unit for a predetermined period from further another point in time when the another terminal logs out from the remote device or the application, or from further another point in time when the another terminal last transmits the transmission information to the remote device.

11. The information providing method according to claim 4 dependent on claim 3, wherein
the display information is permitted to be displayed on the display unit when the first information is acquired and the second information is acquired.

12. The information providing method according to any one of claims 1 to 11, further comprising:

a step of acquiring host vehicle position information that is information related to a current geographical position of the vehicle, wherein
in the step of generating the display information, the display information having the display area for displaying the map information of a predetermined geographical range including the current geographical position of the vehicle is generated based on the host vehicle position information.

13. The information providing method according to claim 12, wherein
in the step of generating the display information, the display information having the display area for displaying the map information including information indicating the current geographical position of the another vehicle included in the predetermined geographical range, among the current geographical position of the another vehicle, is generated based on the another vehicle position information.

14. The information providing method according to any one of claims 1 to 13, further comprising:

a step of acquiring traveling caution position information that is information related to a geographical position to be careful during vehicle-travel, wherein
in the step of generating the display information, based on the traveling caution position information,

the display information having the display area for displaying the map information further including information indicating the geographical position to be careful during vehicle-travel is generated, and/or
the display information having the display area for further displaying information indicating an approach to the geographical position to be careful during vehicle-travel is generated.

15. The information providing method according to claim 14, further comprising:

a step of acquiring host vehicle position information that is information related to a current geographical position of the vehicle; and
a step of determining that the current geographical position of the vehicle has approached the geographical position to be careful during vehicle-travel.

16. The information providing method according to claim 15, further comprising:
a step of notifying the display unit, a terminal fixed to the vehicle, or a terminal used by the occupant, when it is determined that the current geographical position of the vehicle has approached the geographical position to be careful during vehicle-travel.

17. The information providing method according to any one of claims 14 to 16, wherein
in the step of generating the display information, the display information having the display area is generated such that, when both the another vehicle position information and the traveling caution position information are acquired, information indicating the geographical position to be careful during vehicle-travel is preferentially displayed on the map information over information indicating the current geographical position of the another vehicle.

18. The information providing method according to any one of claims 1 to 17, wherein
the vehicle includes an input unit that receives an input from a leg of the occupant, and a wheel to which power input to the input unit is transmitted.

19. The information providing method according to any one of claims 1 to 18, wherein
the another vehicle includes an input unit that receives an input from a leg of another occupant who is an occupant of the another vehicle, and a wheel to which power input to the input unit is transmitted.

20. The information providing method according to claim 18 or 19, wherein
the vehicle further includes an electric motor that transmits the output power to the wheel or another wheel different from the wheel.

21. An information providing program of providing information to an occupant of a vehicle, the information providing program causing a computer to perform:

a step of acquiring another vehicle position information that is information related to a current geographical position of another vehicle different from the vehicle;
a step of generating display information having a display area for displaying map information, which includes information indicating the current geographical position of the another vehicle, based on the another vehicle position information, the display information being information to be displayed on a display unit disposed at a position visually recognizable by the occupant; and
a step of displaying the display information on the display unit.

22. A computer-readable storage medium storing an information providing program according to claim 21.

23. An information processing device that provides information to an occupant of a vehicle, the information processing device comprising:

a position information acquisition unit that acquires another vehicle position information that is information related to a current geographical position of another vehicle different from the vehicle;
a generation unit that generates display information having a display area for displaying map information, which includes information indicating the current geographical position of the another vehicle, based on the another vehicle position information acquired by the position information acquisition unit, the display information being information to be displayed on a display unit disposed at a position visually recognizable by the occupant; and
an output unit that outputs the display information generated by the generation unit to the display unit.

**FIG. 1**

EP 4 671 687 A1

# FIG. 2

# FIG. 3

FIG. 4

FIG. 5

# FIG. 6

FIG. 7

# FIG. 8

USER

8  800

USER APPLICATION

USER APPLICATION

QR CODE IN USER APPLICATION

USER APPLICATION  USER APPLICATION

APPLICATION DOWNLOAD

MEMBER REGISTRATION

10  60

DELIVERY COMPLETION

TRAVELING LOG

SALES STORE

STORE APPLICATION

STORE APPLICATION

ACCESS BY WEB BROWSER

90  LOG IN

ASSEMBLY INFORMATION

CHECK RESULT

DELIVERY PROCEDURE

TRAVELING DATA

BROWSE AND EDIT STORED DATA

SERVER

SERVER

MEMBER INFORMATION STORAGE

API FOR STORE

API FOR USER

SERVICE INTRODUCTION WEBSITE

USER WEBSITE

VEHICLE INFORMATION STORAGE

VEHICLE INFORMATION CHANGE

TRAVELING LOG STORAGE

APPLICATION STORE

MANAGEMENT WEBSITE

# FIG. 9

**PORTABLE TERMINAL** — 8

- DISPLAY — 800
- STORAGE UNIT — 802
- CONTROL UNIT — 801
  - OUTPUT UNIT — 801d
  - GENERATION UNIT — 801c
  - INPUT RECEPTION UNIT — 801b
  - ACQUISITION UNIT — 801a

**SERVER** — 90

- STORAGE UNIT — 902
- CONTROL UNIT — 901

·TRAVELING LOG
·CURRENT POSITION OF VEHICLE

·TRAVELING CAUTION POSITION INFORMATION
·CURRENT POSITION INFORMATION OF OTHER VEHICLE

·VEHICLE AND OTHERS STATES
·CURRENT POSITION OF VEHICLE

ASSIST SETTING

**ELECTRIC BICYCLE** — 10

- BLE UNIT — 44
- CONTROL CIRCUIT — 40
  - STATE ACQUISITION UNIT — 40a
  - POSITION INFORMATION ACQUISITION UNIT — 40b
  - ASSIST CONTROL UNIT — 40c
- BATTERY UNIT — 4
- SENSOR — SE1~SE4
- GNSS UNIT — 43
- POWER UNIT — 20

# FIG. 10

8

800

810

○○ BIKE MODEL X

812

TOTAL TRAVELING DISTANCE **7253** **km**

813

811

| NOTICE | FRIEND | SHOP |
|--------|--------|------|
| VEHICLE SWITCHING | MY STORE | DESIGN CHANGE |

860

861    862    863    864    865

# FIG. 11

8

800

RETURN          FRIEND U1                          8110

8111

FAVORITE

THEY WILL NOW BE DISPLAYED AT THE
TOP OF YOUR FRIENDS LIST.                          8112

POSITION INFORMATION SHARING FUNCTION

IT IS POSSIBLE TO SHARE USER'S POSITION AT THE
TIME OF RIDING BICYCLE AND CONFIRM IT ON MAP.      8113

VEHICLE THAT YOU HAVE PERMISSION TO USE

△△ BIKE MODEL Y                                    8114

VEHICLE THAT YOU HAVE GIVEN
PERMISSION TO YOUR FRIEND TO USE

□□ BIKE

○○ BIKE MODEL X                                   8115

860

861        862        863        864        865

# FIG. 12

# FIG. 13

! IT IS A WARNING AREA !

10.1 km/h

3.2 km    210 kcal

# FIG. 14

SPEED [km/h]
16.0

TRAVELING DISTANCE [km]
3.1

TRAVELING TIME
24:32

CALORIE [kcal]
204

CADENCE [rpm]
75

POWER
< Level 3 MAX >

# FIG. 15

# FIG. 16

# FIG. 17

8

800

RETURN      DECEMBER 29TH (MONDAY)      — 8400

| 6:45<br>7:00 SCHOOL ROUTE (GOING TO SCHOOL) | — 8401 |

| TRAVELING TIME | TRAVELING DISTANCE | CALORIES |
|---|---|---|
| 15 min | 3. 16 km | 100 kcal |

∨

| 17:30<br>17:45 SCHOOL ROUTE (GOING HOME) | 8401 |

| TRAVELING TIME | TRAVELING DISTANCE | CALORIES |
|---|---|---|
| 15 min | 3. 16 km | 100 kcal |

∨

860

861      862      863      864      865

# FIG. 18

RETURN    DECEMBER 29TH (MONDAY)

6:45
7:00    SCHOOL ROUTE (GOING TO SCHOOL)

| TRAVELING TIME | TRAVELING DISTANCE | CALORIES |
| --- | --- | --- |
| 15 min | 3. 16 km | 100 kcal |

| MAXIMUM SPEED | AVERAGE SPEED | BATTERY |
| --- | --- | --- |
| 25. 3 km/h | 16. 1 km | 17 % |

START

GOAL

# FIG. 19

ASSIST SETTING — 850

ASSIST POWER SUPPLY — 851

SUDDEN START PREVENTION CONTROL — 852
CONTROL IS PERFORMED SO THAT
BICYCLE DOES NOT SUDDENLY START.

AUTOMATIC SWITCHING MODE — 853
WHEN AUTOMATIC SWITCHING MODE IS TURNED ON,
OPTIMUM POWER AND RESPONSE ARE AUTOMATICALLY
CONTROLLED ACCORDING TO USER'S TRAVELING CHARACTERISTICS.

WHEN AUTOMATIC SWITCHING MODE IS TURNED OFF, YOU CAN
SET ASSIST POWER AND RESPONSE TO YOUR PREFERENCE.

POWER **Level 2**
Level 2 | MAX — 854

RESPONSE **Level 2**
Level 2 | MAX — 855

— 860

861    862    863    864    865

# FIG. 20

```
┌─────────────────────────────────┐         ┌──────────────────┐           ┌──────────────┐
│ CONTROL CIRCUIT OF ELECTRIC     │~40      │ PORTABLE TERMINAL │~8         │    SERVER    │~90
│ BICYCLE                         │         └──────────────────┘           └──────────────┘
└─────────────────────────────────┘
```

STARTUP REQUEST

S10

| ACQUIRE VEHICLE AND OTHERS STATES | ~S12

| ACQUIRE CURRENT POSITION | ~S14

| ACQUIRE CURRENT POSITION INFORMATION OF OTHER VEHICLE | ~S20

TRANSMIT VEHICLE AND OTHERS STATES AND CURRENT POSITION

S16

| ACQUIRE VEHICLE AND OTHERS STATES AND CURRENT POSITION | ~S18

TRANSMIT WARNING POSITION INFORMATION AND CURRENT POSITION INFORMATION OF OTHER VEHICLE

S22

| ACQUIRE WARNING POSITION INFORMATION AND CURRENT POSITION INFORMATION OF OTHER VEHICLE | ~S24

| GENERATE DISPLAY INFORMATION | ~S26

| DISPLAY DISPLAY INFORMATION | ~S28

EP 4 671 687 A1

# FIG. 21

```
        ┌──────────┐
        │  START   │
        └────┬─────┘
             │
             ▼                  S40
        ◇ APPROACH TO ◇──────── NO ──────┐
        ◇ WARNING POSITION? ◇            │
             │                            │
            YES                           │
             │                            │
             ▼                            │
   ┌────────────────────────────┐         │
   │ NOTIFY OCCUPANT THAT VEHICLE IS │  S42 │
   │ APPROACHING WARNING POSITION │         │
   └────────────┬───────────────┘         │
                │◄──────────────────────┘
                ▼
           ┌──────────┐
           │   END    │
           └──────────┘
```

# FIG. 22

(A)

FRIEND U1

USER U0

| TIME | | | | | |
|---|---|---|---|---|---|
| 6:00 | 7:00 | 8:00 | 9:00 | 10:00 | 11:00 |

DURING RIDING · DISPLAY FINAL RIDING POSITION

USER U0 CAN CONFIRM POSITION INFORMATION OF FRIEND U1.

DURING RIDING

(B)

FRIEND U1

USER U0

| TIME | | | | | |
|---|---|---|---|---|---|
| 6:00 | 7:00 | 8:00 | 9:00 | 10:00 | 11:00 |

DURING RIDING · DISPLAY FINAL RIDING POSITION

USER U0 CAN CONFIRM POSITION INFORMATION OF FRIEND U1.

DURING RIDING

(C)

FRIEND U1

USER U0

| TIME | | | | | |
|---|---|---|---|---|---|
| 6:00 | 7:00 | 8:00 | 9:00 | 10:00 | 11:00 |

DURING RIDING · DISPLAY FINAL RIDING POSITION

USER U0 CAN GRASP THAT FRIEND U1 IS NOT RIDING ELECTRIC BICYCLE.

DURING RIDING

# FIG. 23

## INTERNATIONAL SEARCH REPORT

| International application No. |
|---|
| **PCT/JP2024/012243** |

| A. | CLASSIFICATION OF SUBJECT MATTER |
|---|---|

*G01C 21/26*(2006.01)i; *B62J 50/22*(2020.01)i; *G08G 1/09*(2006.01)i
FI:    G01C21/26 C; G08G1/09 H; B62J50/22

According to International Patent Classification (IPC) or to both national classification and IPC

| B. | FIELDS SEARCHED |
|---|---|

Minimum documentation searched (classification system followed by classification symbols)

G01C21/00-25/00; B62J50/22; G08G1/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2013-120317 A (FUJITSU TEN LTD.) 17 June 2013 (2013-06-17) paragraphs [0021], [0022], [0024], [0030], [0033], [0049], [0062], [0070], [0073], [0083]-[0085], [0129]-[0136], fig. 5, 6, 13 | 1-4, 8, 11-16, 21-23 |
| Y | | 7, 17-20 |
| A | | 5-6, 9-10 |
| Y | JP 2021-190857 A (TOYOTA JIDOSHA KABUSHIKI KAISHA) 13 December 2021 (2021-12-13) paragraphs [0064]-[0065] | 7, 17-20 |
| Y | JP 2006-295388 A (MATSUSHITA ELECTRIC INDUSTRIAL CO., LTD.) 26 October 2006 (2006-10-26) paragraph [0067] | 18-20 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/012243**

| Patent document cited in search report | | | Publication date (day/month/year) | Patent family member(s) | Publication date (day/month/year) |
|---|---|---|---|---|---|
| JP | 2013-120317 | A | 17 June 2013 | (Family: none) | |
| JP | 2021-190857 | A | 13 December 2021 | US 2021/0370987 A1 paragraphs [0072]-[0073] CN 113747393 A | |
| JP | 2006-295388 | A | 26 October 2006 | (Family: none) | |

Form PCT/ISA/210 (patent family annex) (July 2022)

**REFERENCES CITED IN THE DESCRIPTION**

**Patent documents cited in the description**

- JP 2002199433 A

- JP 2023052479 A